# EUROPEAN PATENT APPLICATION

(11) **EP 4 557 500 A1**
(43) Date of publication of application: **21.05.2025**
(21) Application number: 23852970.5
(22) Date of filing: 09.08.2023
(51) Int. Cl.: H01M 50/636, H01M 50/152, H01M 50/169, H01M 50/531, H01M 50/249, H01M 50/159, H01M 50/107, H01M 50/119

(54) **STRUCTURE FOR SEALING INJECTION PORT OF BATTERY CAN, BATTERY CELL TO WHICH SAME IS APPLIED, BATTERY PACK AND VEHICLE**

(30) Priority: 09.08.2022 KR 20220099438; 27.02.2023 KR 20230026231
(71) Applicant: LG Energy Solution, Ltd., Seoul 07335 (KR)
(72) Inventor: HWANG, Dongsung, Daejeon 34122 (KR); SHIN, Hangsoo, Daejeon 34122 (KR)
(74) Representative: Goddar, Heinz J.
(86) International application number: PCT/KR2023/011725
(87) International publication number: WO 2024/035099

(57) **Abstract**

The present invention relates to a structure for sealing a liquid injection port of a cap of a battery can. The structure includes: a liquid injection port provided at a battery can or a cap made of metal material; a stopper made of metal material closing the liquid injection port; and a heat-fused portion interposed between and heat-fused to the stopper and perimeter of the liquid injection port. The heat-fused portion includes a heat-fusion layer containing PP-MAH (polypropylene-maleic anhydride) using one of a first chrome-coated layer coated around the liquid injection port and a second chrome-coated layer coated on the stopper as a substrate. The chromium oxide of the chrome coated layer and PP-MAH may be chemically bonded through heat fusion.

## Description

### [TECHNICAL FIELD]

The present invention relates to a structure for sealing a liquid injection port of a battery can, a battery cell employing the same, a battery pack including the battery cell, and a vehicle equipped with the battery pack.

### [BACKGROUND ART]

A cylindrical battery cell is a structure wherein a jelly-roll shaped electrode assembly is accommodating in a cylindrical metal can, and is more robust to shock and temperature than a pouch-type battery. Accordingly, the demand for using metal can-type cells as battery cells applied to vehicle battery packs is increasing.

The process of manufacturing a battery cell using a cylindrical can includes deep drawing a metal sheet to form a circular bottom and a circular tube-shaped sidewall member connected to the circular bottom, accommodating the electrode assembly in the can, and covering the open end of the sidewall member with a cap.

Crimping or seam welding may be applied to a structure wherein the open end of the battery can is covered with a cap and the cap and the battery can are fixed..

Crimping is a method wherein the open end of the battery can is covered with the cap after injecting an electrolyte solution into the battery can through the open end and the front end of the sidewall portion of the battery can beaded or crimped to press and fix the edge of the cap. While the crimping is advantageous in that heat that may cause the electrolyte solution filled inside the battery can to deteriorate or ignite during the processing is not generated, the crimping is disadvantageous in that the fixing structure of the cap is complicated, and consumes the internal volume of the battery can to reduce energy density.

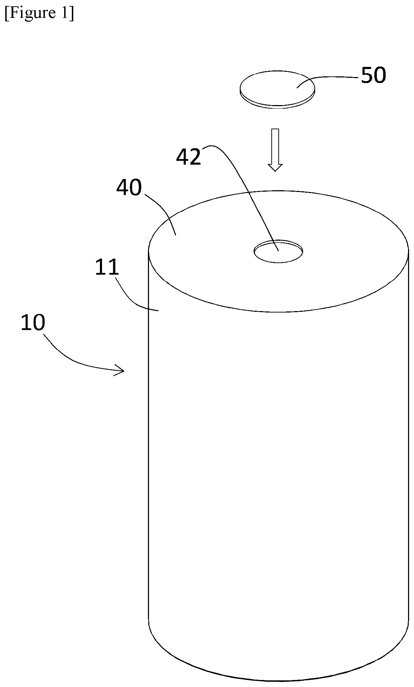

Referring to FIGS. 1 to 6, seam welding is a process of bringing the perimeter of the tip of the sidewall portion 11 of the battery can 10 into contact with the perimeter of the edge of the cap 40 and welding the same along the circumferential direction thereof such that more volume of the electrode assembly that may be accommodated in the battery can is secured due to the simplicity of the fixing structure thereof. Therefore, the seam welding is more advantageous in securing electric capacity with respect to the volume of battery can.

However, when welding is performed by filling the battery can with an electrolyte solution and then covering the open end of the battery can with a cap, there is a possibility that the electrolyte solution may deteriorate or ignite due to the high-temperature generated by welding.

Thus, when the cap is to be fixed by subjecting the perimeter of the open end of the battery can and cap to seam welding, a method may be applied wherein a battery can 10 provided with a liquid injection port at the bottom portion or a cap 40 provided with a liquid injection port 42 are prepared; the electrolyte solution is injected through the liquid injection port 42 provided at the cap or the bottom portion of the battery can after accommodating the electrode assembly in the battery can and seam-welding the battery can 10 and the cap; and closing and sealing and the liquid injection port with a stopper after completing the liquid injection.

As a method of closing the liquid injection port after injecting the electrolyte solution through the liquid injection port 42, seam-welding of a metal stopper, a blind riveting, a metal ball insertion, etc. may be used.

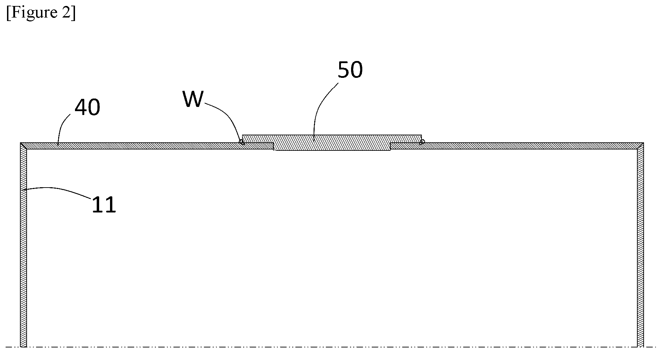

First, referring to FIGS. 1 and 2, in the seam-welding of a metal stopper, the liquid injection port 42 provided in the battery can 10 is covered with a metal stopper 50, and the edge of the stopper 50 is then seam-welded to the cap 40 to form a welding portion W. During the seam welding, for example, the surface temperature may rise up to 1400 degrees Celsius which is the melting point of SUS when the battery can and the cap are made of SUS. Such high-temperature heat may cause ignition of the electrolyte solution. That is, the method of sealing the liquid injection port by seam-welding the metal stopper goes directly against the purpose of employing the structure of the liquid injection port which is to minimize the effect the heat on the electrolyte solution generated during the seam-welding of the perimeter of the open end circumference of the battery can to the cap. In addition, while an additional structure that may prevent ignition of the electrolyte solution may be applied in order to prevent such phenomenon, such additional structure also inevitably occupies more volume of the battery cell inner space, which is disadvantageous in securing the electric capacity of the battery can.

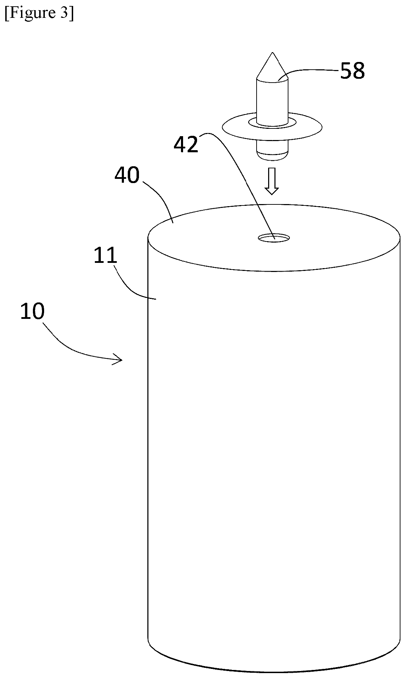

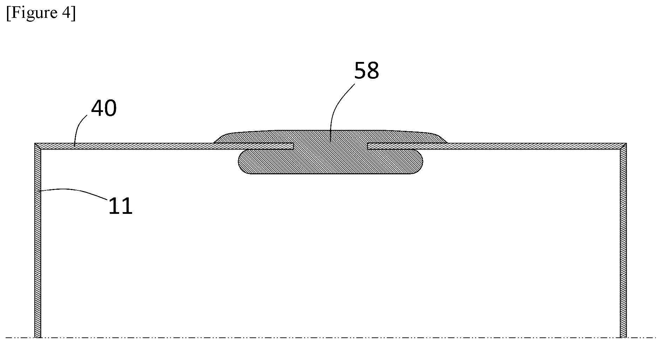

In the sealing method using blind rivets 58 shown in FIGS. 3 and 4, a heavy load is applied to the bonding area as metal is plastically deformed for mechanical sealing. Such heavy loads may cause damage to the coating formed on the surface of the cap 40 and the rivet 58 to prevent leakage. That is, when the load is reduced to prevent damage to the coating, the sealing is weakened, and when the load is increased to improve the sealing, the coating may be damaged and the sealing may be broken. In addition, since the rivet is inserted into the can before riveting is performed, space where the rivet is inserted should be secured inside the battery can, which may cause the reduction of the usable volume inside the battery can.

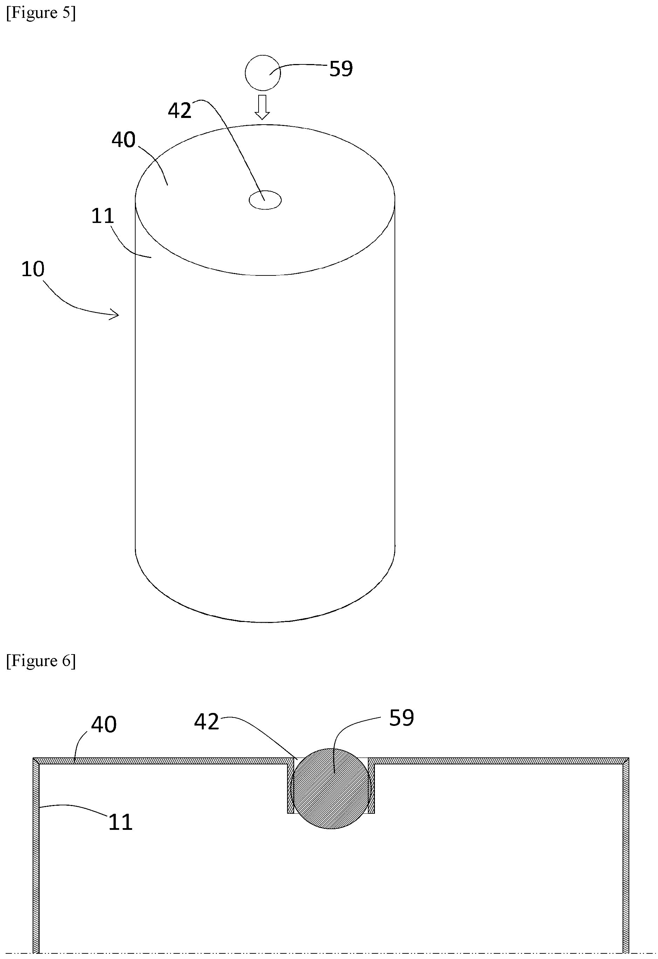

In the metal ball insertion shown in FIGS. 5 and 6, the inner circumferential surface of the liquid injection port 42 must be extended in the axial direction to fix the metal ball 59. However, this structure is disadvantageous in securing the internal volume of the battery can. Additionally, since a heavy load is applied to the electrode when forcing the ball 59 into the liquid injection port 42, there is a possibility that the electrode may be damaged.

### [DISCLOSURE]

### [TECHNICAL PROBLEM]

In order to solve the above-described problems, it is an object of the present invention to provide a sealing structure of a liquid injection port that provides a strong chemical bond between a stopper and a cap to ensures reliable sealing without applying a heavy load to the cap portion around the liquid injection port and heating to high-temperature during the closing of the liquid injection port.

It is an object of the present invention to provide a sealing structure of a liquid injection port capable of preventing denaturalization or ignition of the electrolyte solution by suppressing high-temperature heat, and of reliably preventing leakage without applying a heavy load to the bonding area of the cap by sealing of chemical bonding instead of relying on mechanical sealing.

It is an object of the present invention to provide a sealing method of a liquid injection port that does not affect the electrode or electrolyte solution accommodated in a battery can, and a sealing structure of a liquid injection port to which the method is applied.

It is an object of the present invention to provide a sealing structure of a liquid injection port capable of maximizing the internal volume of a battery cell.

It is an object of the present invention to provide a battery cell to which the above-described sealing structure is applied.

It is an object of the present invention to provide a battery pack including the battery cell, and a vehicle equipped with the battery pack and powered by electrical energy provided from the battery pack.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above-described problems, the present invention provides a structure for sealing a liquid injection port wherein a liquid injection port provided in a battery can or cap made of metal material is closed with a metal stopper.

The battery can and cap may be made of material including aluminum or steel.

The stopper may be made of material including aluminum or steel.

The battery can may be cylindrical. The battery can may include a circular tube-shaped sidewall portion and a bottom portion connected to one axial end of the sidewall portion.

The cap may cover the open end provided at the other axial end of the battery can.

The edge of the cap may be thermally bonded to the perimeter of the other axial end of the battery can sidewall portion.

The thermal bonding may be accomplished by welding, brazing or soldering.

The present invention does not exclude that the cap is crimped and fixed to the battery can.

The liquid injection port may be provided at the cap or at the bottom portion of the battery can.

The liquid injection port may be provided at the center portion of the cap or the center portion of the bottom portion.

The stopper covering the liquid injection port has a cross-section that encompasses and is larger than the cross-section of the liquid injection port.

The liquid injection port may be circular. The stopper may be concentric with the circular liquid injection port and may have a circular plate shape with a radius larger than the radius of the liquid injection port.

The perimeter of the surface of the stopper facing the liquid injection port surrounds the liquid injection port and may be in close contact with the perimeter of the liquid injection port of the bottom portion or the cap of the battery can where the liquid injection port is provided.

A heat-fused portion is interposed between the surface #1 of the battery can or the cap surrounding the liquid injection port and the surface #2 of the stopper in contact with the surface #1.

That is, the surface #1 and the surface #2 may refer to portions where the liquid injection port and the stopper are in contact with each other when the liquid injection port is closed with the stopper.

The heat-fused portion is fused to at least a portion of the surface #1 and the surface #2 in a closed loop shape surrounding the liquid injection port.

The heat-fused portion includes a first chrome-coated layer provided on the surface #1; a second chrome-coated layer provided on the surface #2; and a heat-fusion layer having two sides in contact with the first chrome-coated layer and the second chrome-coated layer, respectively, and containing polypropylene-maleic anhydride bonding to the first chrome-coated layer and the second chrome-coated layer by heat.

The chrome-coated layers may be formed by chromate surface treatment.

The bond may be a chemical bond including a hydrogen bond.

That is, the heat-fused portion may refer to an area where the first chrome-coated layer, the heat-fusion layer and the second chrome-coated layer are stacked in the thicknesswise direction.

The heat-fusion layer may include a non-substrate layer containing PP-MAH.

The area of the first chrome-coated layer may correspond to or be larger than that of the heat-fusion layer.

The PP-MAH may be provided by insert injection on the first chrome-coated layer formed on surface #1.

The first chrome-coated layer may serve as a substrate of the PP-MAH of the heat-fusion layer.

The area of the second chrome-coated layer may correspond to or be larger than that of the heat-fusion layer.

The PP-MAH may be provided by insert injection on the second chrome-coated layer formed on surface #2.

The second chrome-coated layer may serve as a substrate of the PP-MAH of the heat-fusion layer.

The stopper may have a center protrusion that protrudes toward the liquid injection port from a location facing the liquid injection port.

The center protrusion may be inserted into the liquid injection port.

The center protrusion may be in contact with an inner circumferential surface of the battery can or the cap defining the liquid injection port to align centers of the stopper and the liquid injection port.

The center protrusion may penetrate the liquid injection port in a depthwise direction.

The center protrusion is inserted only up to a predetermined depth of the liquid injection port.

The heat-fused portion may be interposed between the center protrusion and the inner circumferential surface of the battery can or the cap defined by the liquid injection port.

The heat-fused portion may not be interposed between the center protrusion and the inner circumferential surface of the battery can or the cap defined by the liquid injection port.

The center protrusion may not be inserted into the liquid injection port.

A recessed portion accommodating the stopper therein may be provided around the liquid injection port.

A protruding portion defining the recessed portion may be provided around the recessed portion.

The outer circumferential surface of the stopper may be in contact with the inner circumferential surface of the recessed portion to align centers of the stopper and the liquid injection port.

The axially outer surface of the stopper accommodated in the recessed portion may correspond to a surface of the protruding portion in an axial direction or may be disposed further inward in the axial direction.

The surface #1 comprises a surface #1-1 facing outward in an axial direction of the battery cell, and the surface #2 comprises a surface #2-1 facing the surface #1-1 and facing inward in the axial direction of the battery cell.

The surface #1-1 may the outer surface of the bottom portion or the cap of the battery can, and the surface #2-1 may be the bottom surface of the stopper.

The heat-fused portion may be provided between the surface #1-1 and the surface #2-1.

The surface #1 may include a surface #1-2 facing inward in the radial direction of the battery cell, and the surface #2 may include a surface #2-2 facing the surface #1-2 and facing outward in the radial direction.

The surface #1-2 may be the inner circumferential surface of the bottom portion or the cap of the battery can that defines the liquid injection port, and the surface #2-2 may be the outer circumferential surface of the center protrusion of the stopper.

The surface #1-2 may be the inner circumferential surface of the protruding portion of the bottom portion or the cap of the battery can that defines the recessed portion, and the surface #2-2 may be the outer circumferential surface of the stopper.

The heat-fused portion may be provided between the surface #1-2 and the surface #2-2.

The heat-fused portion may not be provided between the surface #1-2 and the surface #2-2.

The stopper and the battery can or the cap bonded to the stopper by the heat-fused portion may be electrically connected.

The electrical connection path thereof may include a contact area between the surface #1 and the surface #2 where the heat-fused portion is not interposed.

The electrical connection path thereof may include a heat-fused portion including the non-substrate heat-fusion layer.

A first electrode terminal may be installed at the center portion of the bottom portion.

The first electrode terminal may be installed in the bottom portion while being insulated from the bottom portion.

The bottom portion around the first electrode terminal may constitute a second electrode terminal, and the sidewall portion connected to the bottom portion may also constitute a second electrode terminal.

An electrode assembly with a first electrode and a second electrode may be accommodated in the battery can.

The electrode assembly may have a jelly-roll shape wherein the first electrode and the second electrode are wound with a separator interposed therebetween.

The electrode assembly may be accommodated in the battery can while being aligned with the battery can in an axial direction.

The tab of the first electrode may be located at one axial end of the electrode assembly.

The tab may be a portion of the metal foil of the first electrode extending toward one axial end of the electrode assembly.

The tabs of the first electrodes may be bent in the radial direction to overlap with one another, thereby providing a plane substantially perpendicular to the axial direction.

A current collector plate may be connected to the tab of the first electrode.

The current collector plate may be connected to the first electrode terminal.

Accordingly, the first electrode terminal may have first polarity.

The tab of the second electrode may be located at the other axial end of the electrode assembly.

The tab may be a portion of the metal foil of the second electrode extending toward the other axial end of the electrode assembly.

The tabs of the second electrodes may be bent in the radial direction to overlap with one another, thereby providing a plane substantially perpendicular to the axial direction.

The tab of the second electrode may be disposed at the open end.

The cap may be connected to the tab of the second electrode.

The cap may include an electrode connecting part thermally bonded to the tab of the second electrode of the electrode assembly.

The electrode connecting part may be recessed inward from the surface of the cap in the axial direction.

The electrode connecting part may extend flat in a radial direction.

The electrode connecting part may be connected to the tab of the second electrode of the electrode assembly by thermal bonding.

Thermal bonding of the cap and the tab of the second electrode may be accomplished by one process selected from welding, brazing and soldering.

Accordingly, the cap, the sidewall portion connected to the cap, and the bottom portion connected to the sidewall portion may have a second polarity.

The thermally bonded portion of the electrode connecting part and the tab of the second electrode may be provided along the extending direction of the electrode connecting part.

The thermally bonded portion may be a welding portion W formed by a laser irradiated to scan the surface of the electrode connecting part along a radial direction.

The liquid injection port may be provided in the center portion of the cap.

The liquid injection port may be aligned with the core hollow portion of the electrode assembly.

The electrode connecting part may extend radially around the liquid injection port.

The cap may have a base surface extending outward in the axial direction from the electrode connecting part.

The base surface may be disposed further outward in the axial direction than the bonding area M of the cap and the battery can.

The axially outer surface of the stopper may be disposed further inward in the axial direction than the base surface.

The liquid injection port may be provided at a protruding portion that protrudes further than the electrode connecting part in the axial direction.

The cap may be provided with two or more electrode connecting parts recessed toward the inside of the battery can and extending in a radial direction. Four electrode connecting parts may be provided.

The welding portion may be formed by a laser irradiated onto the surface of the electrode connecting part along the extending direction of the electrode connecting part.

Additionally, the present invention provides a manufacturing method of a battery cell employing the sealing structure of the liquid injection port.

The first embodiment of the manufacturing method includes a battery can preparation step, an electrode assembly preparation step, a cap preparation step, a stopper preparation step, an electrode assembly receiving step, a first electrode terminal connecting step, a cap connecting step, a liquid injection step, and a liquid injection port closing step.

The battery can preparation step includes: preparing a battery can having a sidewall portion, a bottom portion connected to one axial end of the sidewall portion and an open end provided at other axial end of the sidewall portion, and sealing and insulating a first electrode terminal at a center of the bottom portion.

The electrode assembly preparation step includes: manufacturing an electrode assembly including a first electrode and a second electrode, wherein tab of the first electrode 21 and tab of the second electrode 22 are disposed at two sides of an axial direction, respectively.

The electrode assembly preparation step may include: bending the tab of the first electrode in the radial direction and thermally bonding the current collector plate to the bent part.

The cap preparation step includes: manufacturing a cap including an electrode connecting part electrically connected to the tab of the second electrode and a liquid injection port provided in the center portion of the electrode connecting part.

The cap preparation step may include: treating the chromate surface around the liquid injection port.

The stopper preparation step includes: subjecting the surface of the stopper to chromate treatment; and insert-injecting a heat-fusion layer containing PP-MAH into the chrome-coated layer formed by the chromate treatment.

The electrode assembly accommodating step includes: accommodating the electrode assembly in the battery can in a manner that the tab of the first electrode faces the bottom portion of the battery can after the battery can preparation step and the electrode assembly preparation step.

The first electrode terminal connecting step includes: connecting the tabs of the first electrode or the current collector plate connected to the tabs to the first electrode terminal after the electrode assembly accommodating step.

The cap connecting step includes: covering the open end of the battery can with the cap and brining the electrode connecting part into close contact with the tab of the second electrode; electrically connecting the electrode connecting part to the tab of the second electrode by bonding; and bonding the outer circumference of the cap to the perimeter of the open end of the battery can.

The liquid injection step includes: injecting an electrolyte solution into the battery can through liquid injection port after the first electrode terminal connecting step and the cap fixing step.

The liquid injection port closing step includes: covering the liquid injection port with the stopper and heating the heat-fusion layer with a heat fusion equipment to cause chemical bonding having hydrogen bond between the PP-MAH and the chrome-coated layer.

The second embodiment of the manufacturing method includes a battery can preparation step, an electrode assembly preparation step, a cap preparation step, a stopper preparation step, a second electrode connecting step, an electrode assembly accommodation and can insertion step, a first electrode terminal connecting and a cap fixing step, a liquid injection step, and liquid injection port closing step.

The battery can preparation step includes: preparing a battery can having a sidewall portion, a bottom portion connected to one axial end of the sidewall portion and an open end provided at other axial end of the sidewall portion, and sealing and insulating a first electrode terminal at a center of the bottom portion.

The electrode assembly preparation step includes: manufacturing an electrode assembly including a first electrode and a second electrode, wherein tab of the first electrode 21 and tab of the second electrode 22 are disposed at two sides of an axial direction, respectively.

The electrode assembly preparation step may include: bending the tab of the first electrode in the radial direction and thermally bonding the current collector plate to the bent part.

The cap preparation step includes: manufacturing a cap including an electrode connecting part electrically connected to the tab of the second electrode and a liquid injection port provided in the center portion of the electrode connecting part.

The cap preparation step may include: treating the chromate surface around the liquid injection port.

The stopper preparation step includes: subjecting the surface of the stopper to chromate treatment; and insert-injecting a heat-fusion layer containing PP-MAH into the chrome-coated layer formed by the chromate treatment.

The second electrode connecting step includes: electrically connecting the electrode connecting part of the cap to the tab of the second electrode by bonding after the electrode assembly preparation step and the cap preparation step.

The electrode assembly accommodating and cap inserting step includes: accommodating the electrode assembly in the battery can in a manner that the tab of the first electrode faces the bottom portion of the battery can and inserting the cap into the open end of the battery can after the battery can preparation step and the second electrode terminal connecting step.

The first electrode terminal connecting and cap fixing step includes: connecting the tabs of the first electrode to the first electrode terminal and bonding the outer circumference of the cap to the perimeter of the open end of the battery can after the electrode assembly accommodating and cap inserting step.

The liquid injection step includes: injecting an electrolyte solution into the battery can through liquid injection port after the first electrode terminal connecting step and the cap fixing step.

The liquid injection port closing step includes: covering the liquid injection port with the stopper and heating the heat-fusion layer with a heat fusion equipment to cause chemical bonding having hydrogen bond between the PP-MAH and the chrome-coated layer.

The present invention provides a high energy density battery pack including the above-described battery cell.

The present invention provides a vehicle equipped with a battery pack with high energy density, thereby reducing the volume or load occupied by the battery pack.

### [ADVANTAGEOUS EFFECTS]

According to the present invention, since the liquid injection port is not closed with a rivet that applies a load for plastic deformation or a metal ball that applies a load for forced press-fit, there is no risk of the cap being deformed or the electrode inside the battery can being damaged, and since a space for inserting rivets for riveting or a space for metal balls to be pressed into the battery cell is not required, more available internal volume of the battery cell is secured and the energy density of the battery cell is increased.

According to the present invention, since the liquid injection port may be closed at a lower temperature than high-temperature bonding such as welding or medium temperature bonding such as brazing or soldering, it is not necessary for the liquid injection port to protrude further outward than the cap or the battery can in order to prevent heat applied while closing the liquid injection port from conducting to the electrolyte solution or electrode assembly. That is, the cap employing the liquid injection port structure may be designed to be flat such that more internal volume of the battery can may be secured while meeting the same specifications.

According to the present invention, since external force is not applied to the extent of deforming the cap or the battery can and the liquid injection port is closed by bonding the stopper to the cap at a temperature lower than soldering, there is no risk of deformation of the cap, damage or deformation of the electrode assembly and related parts accommodated in the battery can, deterioration or ignition of the electrolyte solution.

According to the present invention, since the heat-fusion layer is chemically bonded to the surfaces of cap and stopper of a metal material by hydrogen bond in the bonding of the two metals, the sealing strength is superior.

According to the present invention, since the heat-fusion layer is formed by insert injection into the stopper, it is not necessary to prepare a separate heat-fusion film, thereby simplifying the sealing operation.

According to the present invention, since the PP-MAH of the heat-fusion layer is chemically bonded to the chrome coated layer of the battery can and stopper, sealing is ensured and the possibility of leakage of electrolyte solution may be greatly reduced.

In addition to the advantageous effects described above, specific effects of the present invention will be described further while describing specific details of the present invention.

### [DESCRIPTION OF DRAWINGS]

FIGS. 1 to 6 are diagrams illustrating methods of closing the liquid injection port for electrolyte solution of a conventional battery can.
FIGS. 7 to 9 are diagrams illustrating a closing structure and a closing method of the liquid injection port for electrolyte solution of the battery can according to a first embodiment of the present invention.
FIG. 10 is a diagram illustrating the chemical bonding structure of chromium oxide and PP-MAH in the chrome coated layer.
FIGS. 11 and 12 are diagrams illustrating the manufacturing process of the electrolyte solution stopper.
FIGS. 13 and 14 are diagrams illustrating the closing structure of the liquid injection port for electrolyte solution of the battery can according to a second embodiment of the present invention.
FIGS. 15 and 16 are diagrams illustrating the closing structure of the liquid injection port for electrolyte solution of the battery can according to a third embodiment of the present invention.
FIG. 17 is a diagram illustrating a closing structure of the liquid injection port for electrolyte solution of the battery can according to a fourth embodiment of the present invention.
FIG. 18 is a perspective view of the battery cell of the embodiment.
FIGS. 19 and 20 are perspective views illustrating a first electrode, a second electrodes and separators before and after stacking for manufacturing an electrode assembly to be accommodated in the battery can, respectively, and FIG. 21 is a plan view of the structure of FIG. 20.
FIGS. 22 and 23 are perspective and side views of an electrode assembly manufactured by winding the laminate of FIGS. 20 and 21 in a jelly-roll shape. FIGS. 24 and 25 are perspective views illustrating an electrode assembly with a current collector plate bonded to an upper portion thereof and without a current collector plate bonded to a lower portion thereof.
FIG. 26 is a cross-sectional view illustrating a process of accommodating the electrode assembly of FIGS. 24 and 25 into a battery can.
FIG. 27 is a cross-sectional view illustrating a process of welding a first electrode terminal and a current collector plate.
FIG. 28 is a diagram illustrating a process of covering an open end of a battery can with a cap.
FIG. 29 is a cross-sectional view illustrating a process of bonding an electrode connecting part of a cap to a tab of a second electrode of an electrode assembly and bonding a perimeter of the cap to an open end of a battery can.
FIG. 30 is a diagram illustrating a process of closing a liquid injection port with a stopper.
FIGS. 31 to 33 are an upper perspective view, a lower perspective view and a top view of a cap according to a fifth embodiment of the present invention.
FIGS. 34 and 35 are cross-sectional views of the corresponding part of FIG. 33. FIG. 36 is a perspective view illustrating a cap bonded to a lower part of an electrode assembly.

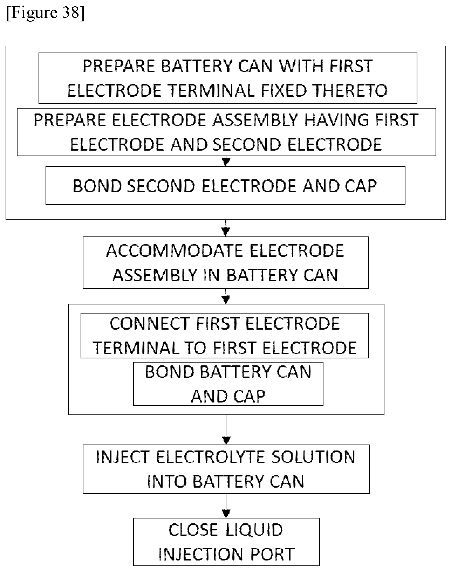

FIGS. 37 and 38 are flowcharts illustrating a manufacturing method of a battery cell employing a liquid injection port closing structure according to the first embodiment and the second embodiment of the present invention, respectively.
FIGS. 39 and 40 illustrate a battery pack employing a battery cell according to the embodiment and a vehicle equipped with this battery pack, respectively.

### [DESCRIPTION OF REFERENCE NUMERALS]

10: battery can 11: sidewall portion 12: bottom portion 13: positive terminal (first electrode terminal) 14: terminal gasket 15: negative terminal (second electrode terminal) 19: insulator 20: electrode assembly 21: first electrode 22: second electrode 23: metal foil 24: active material layer 25: coated area 26: non-coated area 27: notched tab 28: separator 31: current collector plate 32: terminal connecting part 33: ring part 34: electrode connecting part40: cap41: electrode connecting part W: welding portion 42: liquid injection port 43: protruding portion44: base surface 45: press-fitted outer wall M: bonding area 46: chrome-coated layer (first) 47: recessed portion 50: stopper 51: center protrusion 53: chrome-coated layer (second) 55: PP-MAH(heat-fusion layer) 58: rivet 59: ball 60: heat fusion equipment 70: battery pack 71: housing 72: battery cell 80: vehicle

### [SPECIFIC DETAILS FOR CARRYING OUT THE INVENTION]

Hereinafter, preferred embodiments of the present invention will be described in detail with reference to the accompanying drawings.

The present invention is not limited to the embodiments disclosed hereinafter, and various changes may be applied and may be implemented in various different forms. The embodiment herein is only provided to complete the disclosure of the present invention and to fully inform those skilled in the art of the scope of the invention. Therefore, the present invention is not limited to the embodiments disclosed hereinafter, and it should be understood that the present invention includes all changes and equivalents encompassed in the technical spirit and scope of the present invention as well as substitution or addition of a configuration of one embodiment with that of another embodiment.

The accompanying drawings are only for facilitating understanding of the embodiments disclosed herein, and it should be understood that the technical idea disclosed herein is not limited by the accompanying drawings, and that encompasses all changes, equivalents and substitutions of the spirit and technical scope of the present invention. In the accompanying drawings, while components may be exaggeratedly large or small in size or thickness to facilitate understanding, etc., this should not construe the scope of protection of the present invention as being limited.

Terms used herein are only used to describe specific embodiments or examples, and are not intended to limit the present invention. In addition, the expressions in singular form include expressions in plural form unless the context clearly dictates otherwise. Herein, terms such as "comprise" and "consist of" are intended to designate that features, numbers, steps, operations, components, parts, or combinations thereof described in the specification exist. That is, it should be understood that terms such as "comprise", "consist of" used herein should not preclude the possibility of the presence or addition of one or more other features, numbers, steps, operations, components, parts, or combinations thereof.

While terms including ordinal numbers such as "first" and "second" may be used to describe various components, the components are not limited by the terms. The terms are only used for the purpose of distinguishing one component from another.

It should be understood that when an element is referred to as being "connected" to another element, the element may be directly connected to another element, or there may exist an interposing element in the middle. On the other hand, when an element is referred to as being "directly connected" to another element, it should be understood that there is no interposing element in the middle.

When an element is referred to as being "above" or "under" another element, it should be understood that there may exist an interposing elements in the middle as well as being directly above or under another element.

Unless defined otherwise, all terms used herein, including technical or scientific terms, have the same meaning as commonly understood by those skilled in the art to which the present invention belongs. Terms such as those defined in commonly used dictionaries should be interpreted as having a meaning consistent with the meaning in the context of the related art, and unless explicitly defined herein, terms such as those defined in commonly used dictionaries should not be interpreted in an ideal or excessively formal meaning.

In the description of the embodiments, "axial direction" refers to "a direction in which the axis constituting the winding center of the jelly-roll type electrode assembly extends", and "radial direction" refers to "a direction toward (centripetal) or away (centrifugal) from the axis," and "circumferential direction" refers to "a direction surrounding the axis."

The widthwise direction of the electrode assembly in the deployed state corresponds to the axial direction of the jelly-roll. The lengthwise direction of the electrode assembly in deployed state corresponds to the circumferential direction of the jelly-roll.

### [FIRST EMBODIMENT]

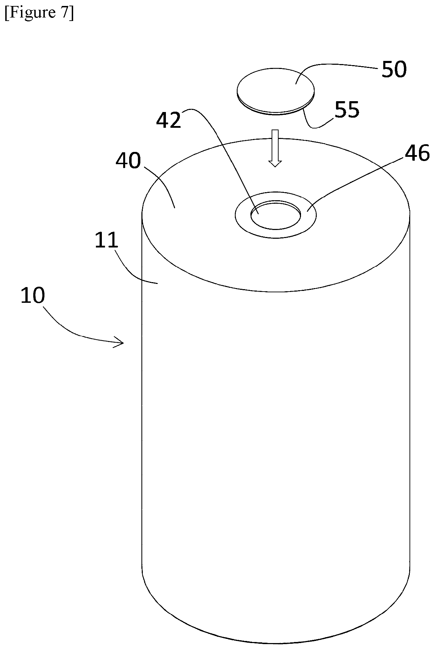

First, referring to FIGS. 7 to 12, the sealing structure of the liquid injection port according to the first embodiment includes: a battery can 10 or a cap 40 made of metal material provided with a liquid injection port 42; and a metal stopper 50 that covers and seals the liquid injection port 42.

According to the embodiment, the liquid injection port 42 is provided at the cap 40. However, apparently, the liquid injection port 42 may be provided at the can 10. In the case of a cylindrical battery can, the liquid injection port 42 may be provided at the center portion of the cap 40 or at the center portion of the bottom portion of the can 10.

The battery can 10 and the cap 40 may be made of aluminum, steel or alloys thereof. Additionally, the stopper 50 may also be made of be aluminum, steel or alloys thereof. According to the embodiment, aluminum is exemplified as a material for the battery can 10 and the cap 40.

The battery can 10 may be cylindrical. The battery can 10 may include a sidewall portion 11 in the shape of a hollow circular tube and a bottom portion 12 connected to one axial end of the sidewall portion 11. However, the shape of the battery can 10 of the present invention is not limited thereto, and apparently, rectangular can is also applicable.

The cap 40 may cover the open end provided at the other axial end of the battery can 10. The cap 40 may be circular. However, the shape of the cap 40 of the present invention is not limited thereto, and apparently, a polygonal cap is also applicable.

The edge of the cap 40 may be bonded to the circumference of the other axial end of the sidewall portion 11 of the battery can 10 while being in contact with the circumference of the other axial end.

The stopper covering the liquid injection port 42 has a cross-section that encompasses and is larger than the cross-section of the liquid injection port 42. In the embodiment, a circular liquid injection port 42 and a stopper 50 of a circular plate with a radius larger than that of the liquid injection port 42 are exemplified.

A first chrome-coated layer 46 is formed on the outer surface of the cap 40 provided with the liquid injection port 42 and the inner circumferential surface of the hole of the cap 40 defining the liquid injection port 42 through chromate surface treatment.

A center protrusion 51, which corresponds to the inner diameter of the liquid injection port 42 and protrudes and extends toward the liquid injection port 42, is provided at the center portion of the inner surface (bottom surface) of the stopper 50,.

With the stopper 50 covering the liquid injection port 42, the center protrusion 51 penetrates the liquid injection port 42 and protrudes further inward than the inner surface of the cap 40.

A second chrome-coated layer 53 is formed on the inner surface (bottom surface) of the stopper 50 and the outer circumferential surface of the center protrusion 51 through chromate surface treatment.

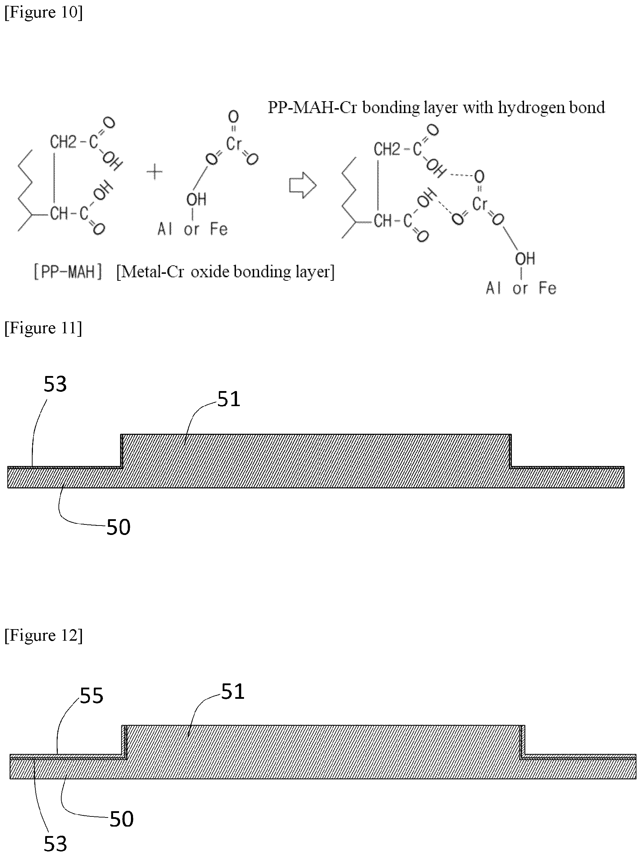

When a chrome coated layer is formed on the cap 40 or the stopper 50 made of aluminum, metal-chromium oxide is coated on the aluminum surface, as shown in FIG. 10.

With the stopper 50 covering the liquid injection port 42, the outer surface of the cap 40 and the inner circumferential surface of the liquid injection port 42 where the first chrome-coated layer 46 is formed are in contact with the bottom surface of the stopper 50 and the outer circumferential surface of the center protrusion 51 where the coated layer 53 is formed, respectively.

A heat-fusion layer 55 is interposed between the first chrome-coated layer 46 and the second chrome-coated layer 53 that are in contact with each other.

The heat-fusion layer 55 may include a non-substrate layer containing PP-MAH.

With the heat-fusion layer 55 interposed, the surface of the stopper 50 is pressed and heated using a heat fusion equipment 60. The heating temperature may be lower than the thermal decomposition temperature of the electrolyte solution injected in the battery can 10.

In the embodiment, the thermal decomposition temperature of the electrolyte solution is approximately 200 degrees Celsius, and the heating temperature of the heat-fusion layer 55 may be lower than 200 degrees Celsius.

As a result, a chemical bond including hydrogen bond is generated between the PP-MAH and the chrome-coated layer of the heat-fusion layer 55 shown in FIG. 10, and a heat-fused portion is formed. That is, when the sealing structure of the liquid injection port according to the embodiment is employed, a strong chemical bond is generated between the stopper and the cap without applying strong external force and high-temperature heat to the cap 40 and the stopper 50 to securely seal the liquid injection port.

For the convenience of the process, PP-MAH may be provided by insert injection to be pre-laminated on the bottom surface of the stopper 50 to form a heat-fusion layer 55.

In order to achieve this, a second chrome-coated layer 53 may be formed on the bottom surface of the stopper 50 and the outer circumferential surface of the center protrusion 51, as shown in FIG. 11.

In addition, as shown in FIG. 12, PP-MAH may be provided by insert injection onto the bottom surface of the stopper 50 and the outer circumferential surface of the center protrusion 51 coated with the second chrome-coated layer 53 to form a heat-fusion layer. 55.

The heat-fusion layer containing the PP-MAH itself is a non-substrate layer. However, since the second chrome-coated layer 53 functions as a substrate of the PP-MAH, the heat-fusion layer may be very stably laminated on the stopper 50.

Accordingly, the heat-fusion layer 55 may be provided integrally laminated on the bottom surface of the stopper 50 as shown in FIG. 7. As a result, the liquid injection port closing work may be completed simply by covering the liquid injection port 42 with the stopper 50 having the heat-fusion layer 55 thereon, and then pressing and heating the stopper 50 with the heat fusion equipment 60 to thermally bond the heat-fusion layer 55 to the chrome-coated layer in contact with the heat-fusion layer 55 via a chemical bond including hydrogen bond.

The first embodiment exemplifies the heat-fusion layer 55 laminated on the second chrome-coated layer 53 of the stopper 50 using the same as a substrate. Since the stopper 50 does not participate in the battery cell manufacturing process until the liquid injection port 42 is closed, there is no risk of the heat-fusion layer 55 being damaged during the manufacturing process, thereby facilitating the handling of the parts.

However, apparently, the heat-fusion layer 55 may be stacked using the first chrome-coated layer 46 of the can 10 as a substrate. When the stopper 50 is pressed and heated with a heat fusion equipment 60 to form a heat-fused portion, heat first reaches the area between the second chrome-coated layer 53 and the heat-fusion layer 55, and then reaches the area between the heat-fusion layer 55 and the first chrome-coated layer 46 considering the heat conduction path. Therefore, when heat-fusion is performed with the heat-fusion layer 55 stacked using the first chrome-coated layer 46 of can 10 as a substrate, it is advantageous that the chemical bond between the second chrome-coated layer 53 and the heat-fusion layer 55 and the chemical bond between the heat-fusion layer 55 and the first chrome-coated layer 46 may be established in a more balanced manner.

According to the first embodiment, the heat-fusion layer 55 is first stacked on the stopper 50. Since the heat-fusion layer 55 stacked on the stopper 50 is formed through insert injection within a mold, the alignment of the second chrome-coated layer 53 and the heat-fusion layer 55 may be precisely achieved.

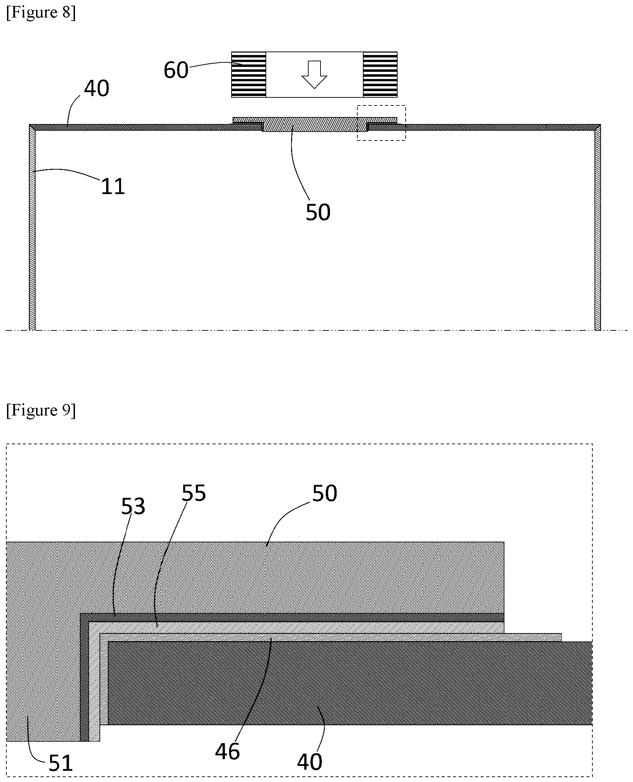

Referring to FIG. 9, the outer side end of the first chrome-coated layer 46 in the radial direction provided on the outer surface of the cap 40 is coated in a manner that the outer side end of the first chrome-coated layer 46 extends further outward in the radial direction than that of the stopper 50 in the radial direction. Accordingly, the risk of the first chrome-coated layer 46 of the can 10 required in forming the heat-fused portion missing from some area of the outer surface of the can 10 caused by manufacturing errors in the stopper 50 or can 10 or assembly errors in the closing process may be prevented in advance.

Similarly, the center protrusion 51 of the stopper 50 may be manufactured to extend longer than the depth of the liquid injection port 42. Accordingly, the risk of the second chrome-coated layer 53 and the heat-fusion layer 55 required in forming the heat-fused portion missing from some area of the inner circumferential surface the liquid injection port 42 caused by manufacturing errors in the stopper 50 or can 10 or assembly errors in the closing process may be prevented in advance.

According to the sealing structure of the liquid injection port of the battery can described above, since the liquid injection port is sealed at a temperature necessary for heat fusion when closing the liquid injection port, there is no possibility of the electrolyte solution deteriorating or igniting, and since heat fusion is performed using parts wherein PP-MAH is insert-injected onto the stopper, the sealing process is simple, and reliable sealing is achieved by chemical bonding between PP-MAH and the chrome coated layer.

### [SECOND EMBODIMENT]

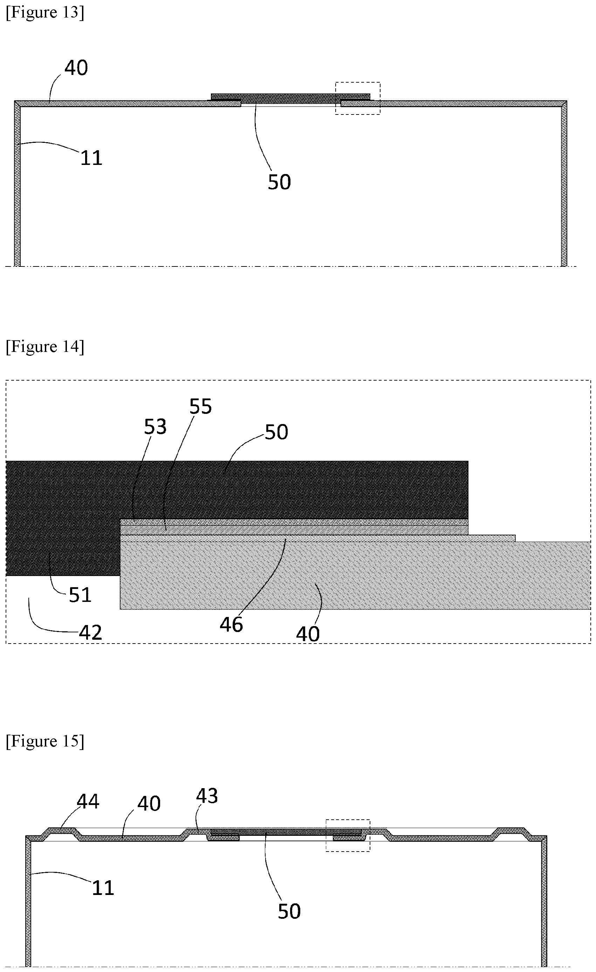

Hereinafter, the sealing structure of the liquid injection port according to the second embodiment will be described with reference to FIGS. 13 and 14. In describing the second embodiment, descriptions that overlap with the first embodiment are not given. Therefore, content that is not specifically described in the description of an embodiment may be understood from those of other embodiments. In addition, it should be understood that substitution, addition, omission or combination between the configurations of one embodiment and another embodiment is also possible.

The sealing structure of the liquid injection port according to the second embodiment is different from the first embodiment in that: the first chrome-coated layer 46 is not provided on the inner circumferential surface of the liquid injection port 42; the second chrome-coated layer 53 is not provided on the outer circumferential surface of the center protrusion 51 of the stopper 50; and the heat-fusion layer 55 is also not interposed between the inner circumferential surface of the liquid injection port 42 and the outer circumferential surface of the center protrusion 51.

In order to form the heat-fused portion between the inner circumferential surface of the liquid injection port 42 and the outer circumferential surface of the center protrusion 51, proper contacts are required between the heat-fusion layer 55 and the chrome-coated layers. However, since the stopper 50 is assembled to the cap 40 in the axial direction, it is possible that the proper contact between the heat-fusion layer 55 and the chrome-coated layers required for forming a heat-fused portion between the inner circumferential surface of the liquid injection port 42 and the outer circumferential surface of the center protrusion 51 facing each other in the radial direction is not established caused by the manufacturing error or assembly tolerance of each part.

Thus, according to the second embodiment, a elements (the first chrome-coated layer, the second chrome-coated layer and the heat-fusion layer) for forming the heat-fused portion between the inner circumferential surface of the liquid injection port 42 and the outer circumferential surface of the center protrusion 51 is omitted, and a sealing structure constructed in a manner that the center protrusion 51 is directly in contact with the inner circumferential surface of the liquid injection port 42 is exemplified.

The center protrusion 51 may provide a function of aligning the centers of the stopper 50 and the liquid injection port 42, and in addition, the outer diameter of the center protrusion 51 may be slightly larger than the inner diameter of the liquid injection port 42 such that the center protrusion 51 is press-fitted into the liquid injection port 42.

As a result, it is not necessary to extend the center protrusion 51 longer than the depth of the liquid injection port 42, and, in order to reduce the pressing force and secure more space inside the battery can 10, the length of the center protrusion 51 may be shorter than the depth of the liquid injection port 42 such that the center protrusion 51 is inserted only up to a predetermined depth of the liquid injection port 42 in the depthwise direction.

Since the cap 40 is capable of functioning as an electrode, and it is more desirable for the stopper 50 to also function as an electrode the same as the cap, the second embodiment wherein the stopper 50 is in direct contact with the cap 40 is more advantageous than the first embodiment wherein the stopper 50 is connected to the cap 40 through the heat-fused portion. Apparently, the heat-fused portion does not electrically insulate the stopper 50 and the cap 40.

Similar to the first embodiment, the heat-fusion layer 55 of the second embodiment may also be stacked by insert injection using the second chrome-coated layer 53 coated on the stopper 50 as a substrate.

### [THIRD EMBODIMENT]

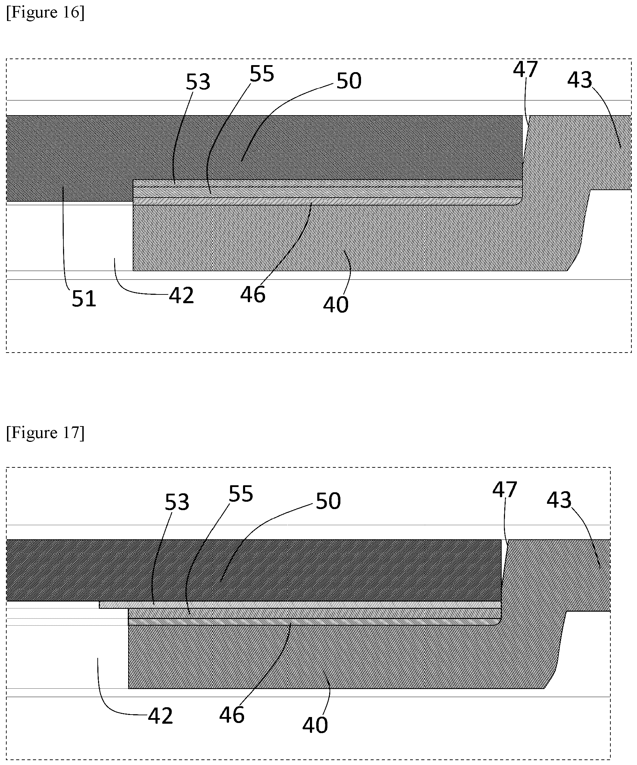

Hereinafter, with reference to FIGS. 15 and 16, the sealing structure of the liquid injection port according to the third embodiment will be described.

The sealing structure of the liquid injection port according to the third embodiment differs from that of the second embodiment in that a protruding portion 43 protruding outward in the axial direction is provided at the outer side of the liquid injection port 42 of the can 10 in the radial direction, and the liquid injection port 42 is provided in a recessed portion 47 recessed inward in the axial direction from the protruding portion 43.

With the stopper 50 covering the liquid injection port 42, the height of the axially outer surface of the stopper 50 may correspond to or be lower than that of the surface of the protruding portion 43.

As a result, the stopper 50 does not protrude from the surface of the cap 40 at all such that there is no risk of the seal being broken by an external force or impact applied to the portion of the stopper 50 protruding from the surface of the cap 40.

The inner circumferential surface of the protruding portion 43 defined by the recessed portion 47 may be contact with the outer circumferential surface of the stopper 50. As a result, when covering the liquid injection port 42 with the stopper 50, the inner circumferential surface of the protruding portion 43 guides the alignment of the stopper 50 and the liquid injection port 42.

In order to achieve this, the upper end of the inner circumferential surface of the protruding portion 43 may be provided with a tapered surface having a diameter gradually decreasing from the boundary between the protruding portion 43 and the recessed portion 47 as approaches inward in the axial direction. Such tapered shape may be naturally formed when the cap 40 is press-processed to form the protruding portion 43 and the recessed portion 47.

The heat-fused portion is not provided between the inner circumferential surface of the protruding portion 43 and the outer circumferential surface of the stopper 50. Accordingly, the inner circumferential surface of the protruding portion 43 may be in direct contact with the outer circumferential surface of the stopper 50, and the stopper 50 may be electrically connected to the protruding portion 43.

Accordingly, when the height of the protruding portion 43 corresponds to the stopper 50, the protruding portion 43 and the stopper 50 themselves function as electrode terminals protruding from the surface of the cap 40. The polarity of such electrode terminal may correspond to that of the cap 40.

According to the third embodiment, the outer diameter of the stopper 50 may be manufactured to correspond to or be slightly larger than the inner diameter of the protruding portion 43 such that the stopper 50 is configured to be press-fitted into the recessed portion 47.

Meanwhile, according to the third embodiment, the structures of the protruding portion 43 and the recessed portion 47 guide the alignment of the liquid injection port 42 and the stopper 50 such that the center protrusion 51 and the liquid injection port 42 are not required to guide in duplication. When guided in duplication, it may rather be difficult to insert the stopper 50 in case of a position error on one side.

Accordingly, according to the third embodiment, contrary to the second embodiment, the center protrusion 51 protrudes low enough to not be inserted into the liquid injection port 42 such that the center protrusion 51 may be prevented from being inserted into the liquid injection port 42 with each of the stacked layers 53, 55 and 46 of the heat-fused portion in contact with one another.

**In** order to achieve this, as shown in FIG. 16, the center protrusion 51 may be formed to have a height longer than the sum of the thicknesses of the second chrome-coated layer 53 and the heat-fusion layer 55, and shorter than the sum of the thicknesses of the second chrome-coated layer 53, the heat-fusion layer 55 and the first chrome-coated layer 46.

Here, the diameter of the center protrusion 51 may be equal to or slightly smaller than that of the liquid injection port 42. The center protrusion 51 may define the radially inner side boundary of the heat-fusion layer 55 during the insert injection process of the heat-fusion layer 55 into the stopper 50.

According to the third embodiment, the stopper 50 covering the liquid injection port 42 of the cap 40 may reliably function as an electrode terminal along with the protruding portion 43 while being protected by the protruding portion 43 and the recessed portion 47.

### [FOURTH EMBODIMENT]

Hereinafter, with reference to FIG. 17, the sealing structure of the liquid injection port according to the fourth embodiment will be described.

The sealing structure of the liquid injection port of the fourth embodiment differs from that of the third embodiment in that the stopper 50 without the center protrusion 51 is applied.

In addition, the sealing structure of the liquid injection port of the fourth embodiment differs from that of the third embodiment in that the heat-fusion layer 55 is stacked by insert injection using the first chrome-coated layer 46 formed at the bottom of the recessed portion 47 of the cap 40 as a substrate.

Since the inner circumferential surface of the recessed portion 47 defines the boundary of the outer circumferential surface of the heat-fusion layer 55 during the insert-injection process of the heat-fusion layer 55, stacking of the heat-fusion layer 55 on the bottom, i.e., the surface, of the recessed portion 47 of the cap 40 is facilitated.

Additionally, the second chrome-coated layer 53 coated on the bottom surface of the stopper 50 according to the fourth embodiment may be formed to have an inner diameter smaller than the liquid injection port 42 of the cap 40. As a result, the second chrome-coated layer 53 is positively present on the entire surface of the heat-fusion layer 55 when the bottom surface of the stopper 50 comes in contact with the heat-fusion layer 55 stacked on the cap 40 by covering the liquid injection port 42 with the stopper 50 despite manufacturing errors or assembly tolerances. Accordingly, a sufficient area of the heat-fused portion may be secured.

According to the fourth embodiment, compared to the third embodiment, it is not necessary to precisely process the height of the center protrusion 51, and there is no risk of damaging the heat-fusion layer 55 during the handling of the cap 40 for battery cell assembly since the heat-fusion layer 55 is stacked on the surface of the recessed portion 47 of the cap 40.

### [FIFTH EMBODIMENT]

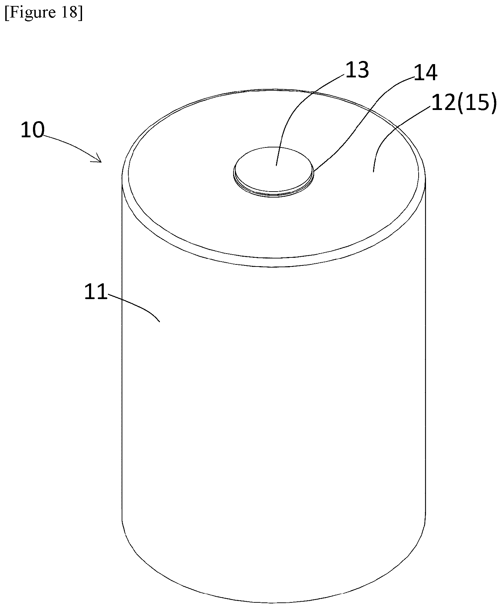

Hereinafter, with reference to FIGS. 18 to 30, a manufacturing method of a battery cell employing the above-described sealing structure of the injection liquid port and the structure of this battery cell will be described.

FIG. 18 illustrates a cylindrical battery cell.

The battery cell of the embodiment may be, for example, a cylindrical battery cell whose form factor ratio (defined as the diameter of the cylindrical battery cell divided by the height, that is, the ratio of the diameter Φ to the height H) is greater than approximately 0.4.

Here, the form factor refers to values representing the diameter and the height of a cylindrical battery cell. The cylindrical battery cell to be applied to the pressure tester may be, for example, a 46110 cell, a 48750 cell, a 48110 cell, a 48800 cell or a 46800 cell. In the values representing the form factor, the first two numbers represent the diameter of the cell, the next two numbers represent the height of the cell, and the last number 0 represents that the cross-section of the cell is circular.

The battery cell to be applied to the pressure tester may be a cell that is approximately cylindrical with a diameter of approximately 46 mm, a height of approximately 110 mm and a form factor ratio of 0.418.

A battery cell according to another embodiment may be a cell that is approximately cylindrical with a diameter of approximately 48 mm, a height of approximately 75 mm and a form factor ratio of 0.640.

A battery cell according to yet another embodiment may be a cell that is approximately cylindrical with a diameter of approximately 48 mm, a height of approximately 110 mm and a form factor ratio of 0.418.

A battery cell according to yet another embodiment may be a cell that is approximately cylindrical with a diameter of approximately 48 mm, a height of approximately 80 mm and a form factor ratio of 0.600.

A battery cell according to another embodiment may be a cell that is approximately cylindrical with a diameter of approximately 46 mm, a height of approximately 80 mm and a form factor ratio of 0.575.

The pressure tester of the present invention may be apparently applied to battery cells with a form factor ratio of approximately 0.4 or less, for example, 18650 cells, 21700 cells, etc. For an 18650 cell, its diameter is approximately 18 mm, its height is approximately 65 mm, and the form factor ratio is 0.277. For a 21700 cell, its diameter is approximately 21 mm, its height is approximately 70 mm, and the form factor ratio is 0.300.

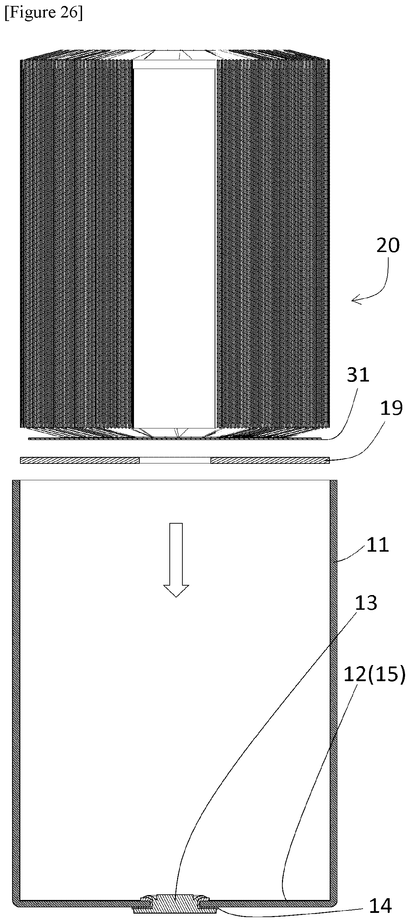

The battery can 10 includes a cylindrical sidewall portion 11 and a bottom portion 12 connected to one axial end of the sidewall portion 11. Here, the term 'bottom' is used since the bottom portion 12 is placed on the floor during the battery cell assembly process wherein the open end of the battery can 10 faces the upward direction as shown in FIGS. 26 to 30, and it should be understood that the bottom portion 12 may be placed at the top along with the first electrode terminal 13 as shown in FIG. 18 during the actual use of the battery cell..

The bottom portion 12 and the sidewall portion 11 of the battery can 10 may be integrated. For example, the battery can 10 may be manufactured by drawing a steel or aluminum sheet material. The opposite end of the sidewall portion 11 in the axial direction, which is not connected to the bottom portion 12, may form an open end.

A hole is formed in the center portion of the bottom portion 12, and the may be fitted into and coupled to the hole. The first electrode terminal 13 may be riveted and fixed to the bottom portion 12 with a terminal gasket 14 interposed therebetween. The terminal gasket 14 is interposed between the first electrode terminal 13 and the bottom portion 12 to seal the inside and outside of the battery can 10, thereby preventing leakage of the electrolyte solution, and to electrically insulating the first electrode terminal 13 from the bottom portion 12.

However, the connection method between the first electrode terminal 13 and the bottom portion 12 is not limited thereto. For example, when the structure is capable of sealing between the first electrode terminal 13 and the bottom portion 12 and electrically insulating the first electrode terminal 13 from the bottom portion 12, various fixing methods, for example, bolt-nut fastening method, glass seal method and thermal bonding method of PP-MAH insulating gasket using an insulating film such as PP (polypropylene) material as a substrate are also applicable.

In an embodiment, the first electrode terminal 13 may have a first polarity, and the battery can 10 may have a second polarity. Accordingly, the bottom portion 12 of the battery can 10 and the sidewall portion 11 connected thereto may both have the second polarity.

Thus, both the first electrode terminal 13 and the second electrode terminal 15 may be disposed at one axial end of the battery can 10. Accordingly, both the busbar connected to the first electrode terminal 13 and the busbar connected to the second electrode terminal 15 may be located at one axial end of the battery can 10, i.e. The upper portion of the battery can 10.

In one example, the first electrode terminal 13 may be a positive terminal, and the second electrode terminal 15 may be a negative terminal. Apparently, it may be vice versa.

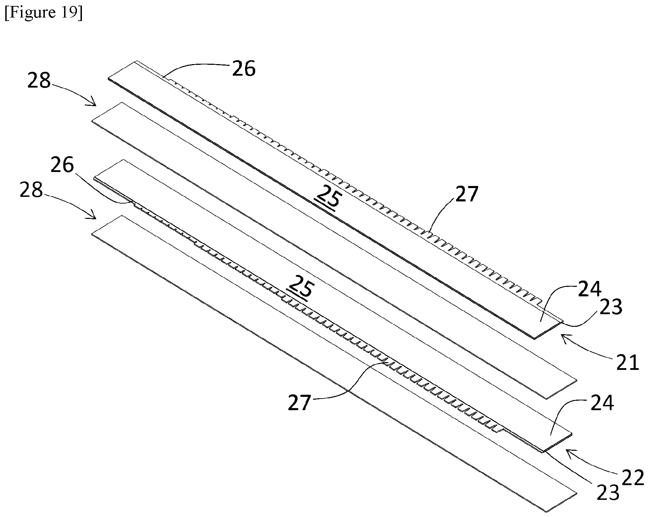

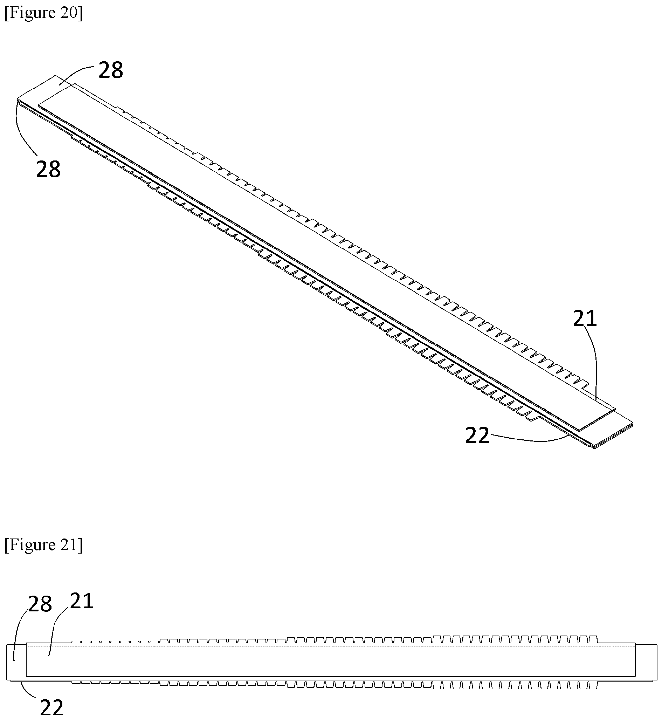

The electrode assembly 20 is accommodated in the battery can 10. The electrode assembly 20 is manufactured by: preparing the first electrode 21, the second electrode 22 and the separators 28 having a predetermined width and extending in the lengthwise direction as shown in FIG. 19; forming a laminate by sequentially stacking the first electrode 21, the separator 28, the second electrode 22 and the separator 28; and coiling the laminate to have a shape of a jelly-roll wound around the core axis as shown in FIGS. 20 and 21.

The first electrode 21 may be an anode, and the second electrode 22 may be a cathode. Apparently, it may be vice versa.

The first electrode 21 and the second electrode 22 are manufactured in a form of a sheet. The electrode sheet is manufactured by applying an active material layer 24 onto the surface of a metal foil 23. The electrode sheet includes a coated area 25 where the active material layer 24 is coated, and a non-coated area 26 where the active material layer 24 is not coated. The anode sheet is provided with the non-coated area 26 at one side in the widthwise direction, and the cathode sheet is provided with the non-coated area 26 at the other side in the widthwise direction.

The non-coated area 26 is exposed or protrudes from the laminate in the widthwise direction. The non-coated area 26 itself functions as an electrode tab.

Notches may be formed at predetermined intervals in the non-coated area 26 to form notched tabs 27 in the form of a flag.

In the embodiment, the notched tabs 27 are illustrated in the shape of an equilateral trapezoid. However, the notched tabs 27 may have various shapes such as semicircular, semielliptical, triangular, rectangular, parallelogram, etc.

Additionally, in the embodiment, the notched tabs 27 having the same width arranged in the lengthwise direction are exemplified. However, the width of the notched tabs may gradually widen from the core side to the outer circumferential side.

In addition, in the embodiment, the height of the notched tabs 27 gradually increases from the core side to the outer circumferential side. However, the height of the notched tabs may be constant or gradually decrease.

In addition, in the embodiment, a structure in which the notched tabs 27 are removed in predetermined sections of the centripetal end and the distal end of the non-coated area 26 is exemplified. However, it is apparent that the notched tabs may not be removed from the distal end of the non-coated area, and the notched tabs may not be removed from the distal end of the non-coated area.

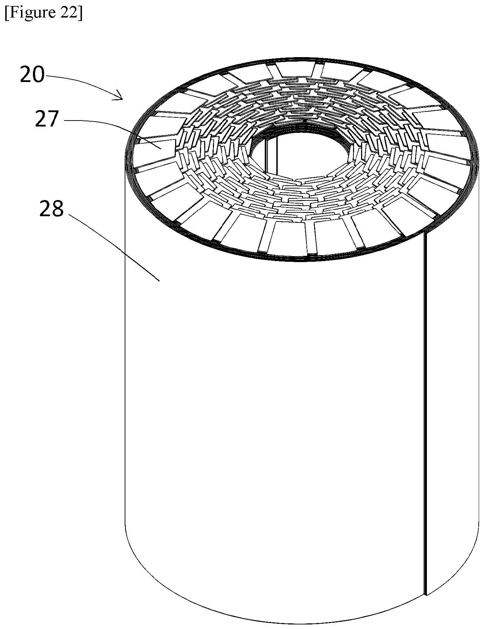

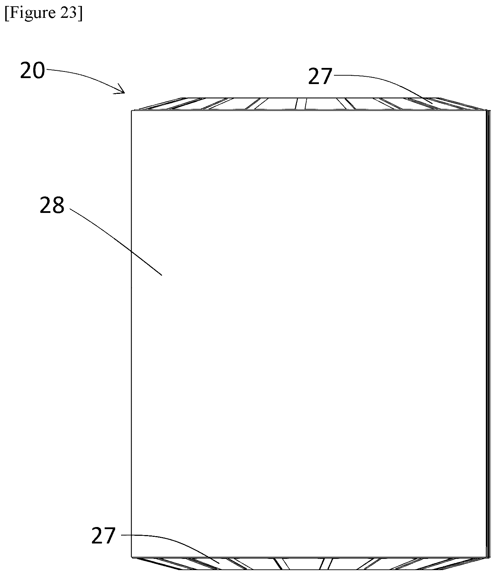

In the jelly-roll shaped electrode assembly 20, the notched tabs 27 may be bent in a radial direction and flattened. The notched tabs 27 may be bent inward or outward in the radial direction. In the embodiment, as shown in FIGS. 22 and 23, a structure in which the notched tabs 27 are bent inward in the radial direction is exemplified.

The notched tabs 27 may be bent one by one in the process of forming the jelly-roll shaped electrode assembly 20 by winding the laminate. Alternatively, the notched tabs 27 may be formed by bending the same all at once after winding the laminate to form a jelly-roll shaped electrode assembly.

The notched tabs 27 of the first electrode 21 and the notched tabs 27 of the second electrode 22, which are bent and overlapped in the radial direction as described above, may provide a plane substantially perpendicular to the axial direction at each of both axial ends of the electrode assembly 20 as shown in FIG. 23.

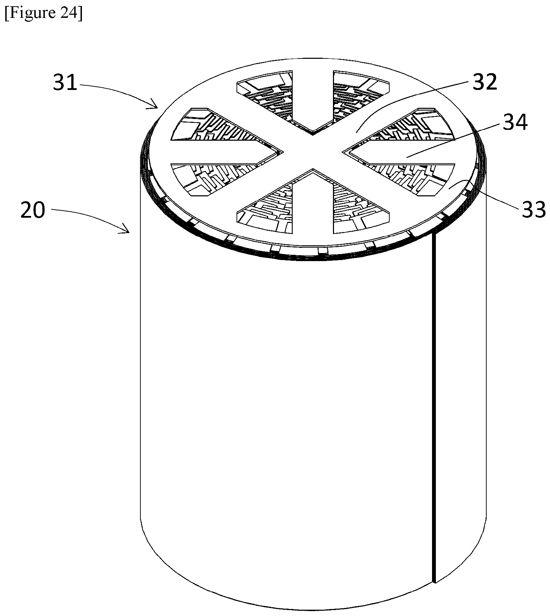

A current collector plate 31 may be bonded to the substantially flat surface provided by bending the notched tab 27 exposed at the both axial ends of the electrode assembly 20, respectively, as shown in FIG. 24.

The current collector plate 31 may be manufactured by punching, trimming, piercing and bending a metal sheet.

Referring to FIG. 24, the current collector plate 31 includes a terminal connecting part 32 extending from the center in the radial direction, and a ring part 33 connecting the distal edge of the terminal connecting part 32 in the circumferential direction, and an electrode connecting part 34 extending centripetally from the ring part 33 but not connected to the terminal connecting part 32. The center of the terminal connecting part 32 covers at least a portion of the core hollow portion of the electrode assembly 20.

The electrode connecting part 34 is bonded to the notched tabs 27 of the first electrode 21 of the electrode assembly 20 using a method such as laser welding before the electrode assembly 20 is inserted into the battery can 10.

Unlike the embodiment, in case of the battery cell having a different structure for example, the notched tab 27 of the first electrode 21 or the current collector plate 31 may be bonded and electrically connected to the bottom portion 12 of the battery can 10 by welding. That is, it should be understood that the fifth embodiment is an example of a battery cell to which the sealing structure of the liquid injection port may be applied. In other words, it should be clearly understood that the sealing structure of the liquid injection port described above is not a technology that may be applied only to the battery cell structure disclosed in the fifth embodiment.

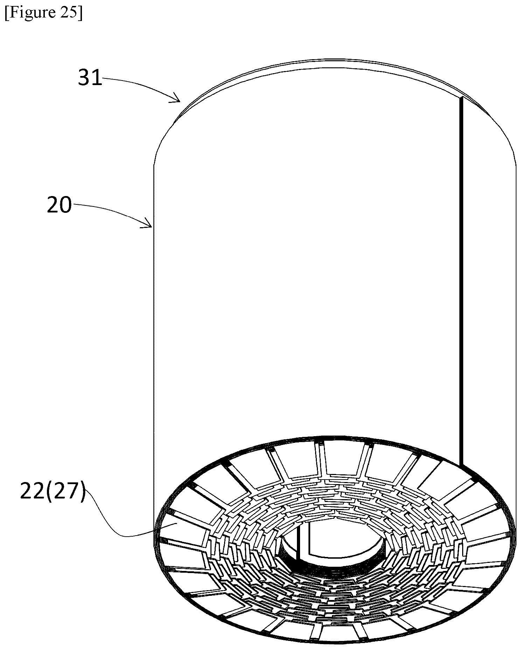

Referring to FIG. 25, the current collector plate may not be connected to the notched tab 27 of the second electrode 22 of the electrode assembly 20. The notched tab 27 may be bonded and electrically connected to the cap 40 by direct welding, etc., which will be described later.

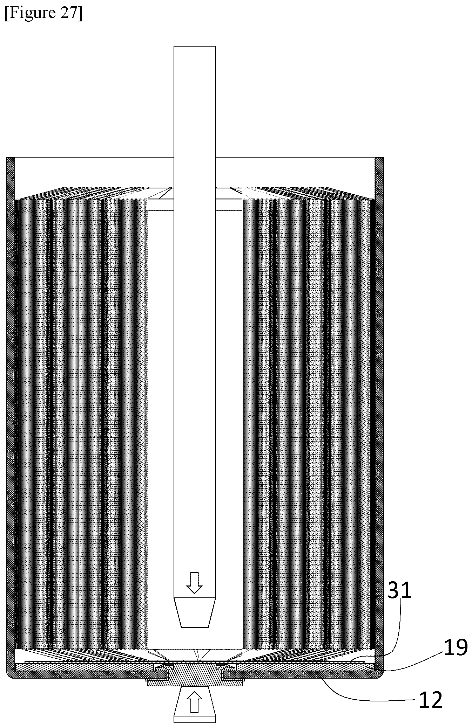

As shown in FIGS. 26 and 27, the electrode assembly 20 is accommodated in the battery can 10 with the current collector plate 31 aligned to face the bottom member 12 of the battery can 10. Here, an insulator 19 is interposed between the current collector plate 31 and the bottom member 12 of the battery can 10 to electrically insulate the first current collector plate 31 and the bottom member 12.

Additionally, the terminal connecting part 32 of the current collector plate 31 is bonded to the first electrode terminal 13 fixed to the battery can 10 by resistance welding, ultrasonic welding or laser welding. The welding device for welding the current collector plate 31 and the first electrode terminal 13 may perform welding by accessing the back side of the center of the terminal connecting part 32 of the current collector plate 31 from the other axial end of the electrode assembly 20 through the core hollow part of the electrode assembly 20. Apparently, in addition to the above-described welding method, the current collector plate 31 and the first electrode terminal 13 may be bonded by brazing or soldering.

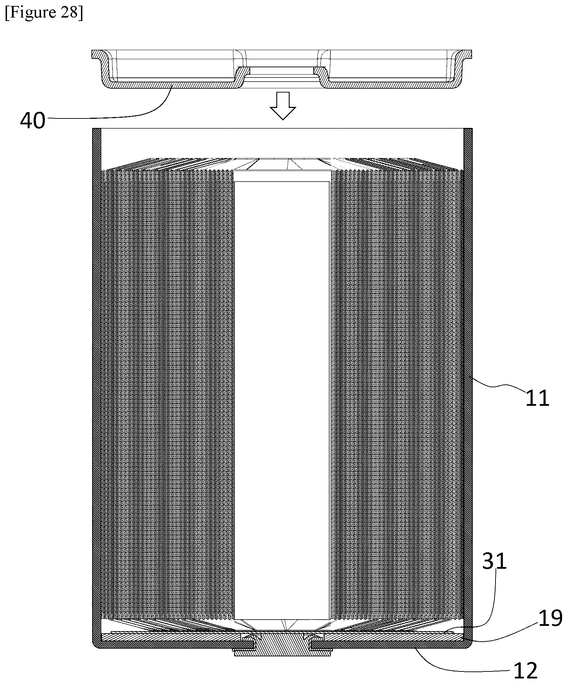

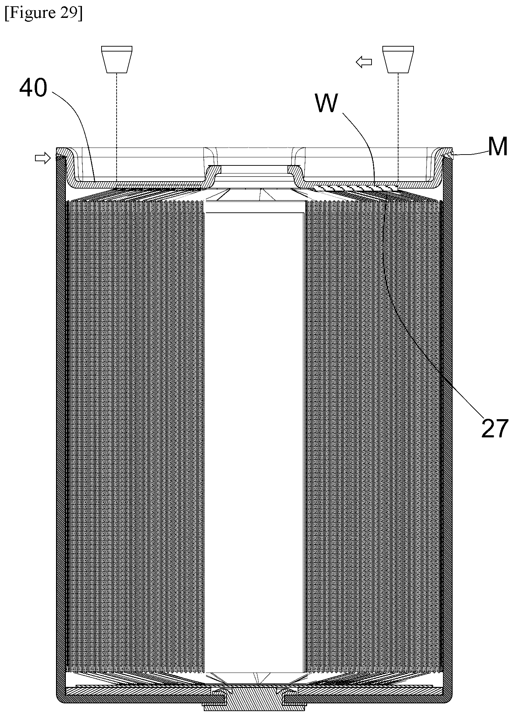

Referring to FIGS. 28 and 29, the notched tab 27 of the second electrode 22 may be in direct contact with the cap 40 that covers the open end of the battery can 10 with the electrode assembly 20 accommodated in the battery can 10 and the first electrode 21 connected to the first electrode terminal 13.

With the cap 40 in close contact with the notched tab 27, a laser may be irradiated onto the surface of the cap 40 along the radial direction using a scan method as shown in FIG. 29 to form a welding portion W extending in the radial direction. Apparently, the laser may not be not irradiated onto the section where the liquid injection port is provided in the scan path.

Accordingly, the second electrode 22 is electrically connected to the notched tab 27 and the welding portion W of the cap 40. Apparently, the notched tab 27 and cap 40 may also be bonded by methods such as brazing or soldering in addition to welding.

Unlike the embodiment, the tab of the second electrode 22 may be bonded and electrically connected to the inner circumferential surface of the sidewall portion 11 of the battery can 10.

In addition, unlike the above embodiment, the tab of the second electrode 22 may be bonded to the cap 40 or the sidewall portion 11 of the battery can 10 through a current collector plate (not shown).

Additionally, the tab of the second electrode 22 or the current collector plate connected thereto may be bonded and connected to both the inner circumferential surface of the sidewall portion 11 and the cap 40.

In addition, a separate second electrode terminal may be provided at the cap 40, and the tab of the second electrode 22 or the current collector plate 31 may be connected to the second electrode terminal.

Referring back to FIG. 29, the edge of the cap 40 is bonded to the open end of the sidewall portion 11 of the battery can 10 to be electrically connected, sealed and fixed. Accordingly, the second electrode 22 may be electrically connected to the cap 40 and the battery can 10. The bonding between the cap 40 and the battery can 10 can also be electrically connected and sealed using various methods such as welding, brazing and soldering.

Apparently, unlike the embodiment, the cap 40 may be fixed to the open end of the sidewall portion 11 of the battery can 10 using a compression sealing method such as crimping as well. It should be understood that even with such structure, the sealing structure of the liquid injection port described above may be applied.

In the process of welding the cap 40 and the sidewall portion 11, high-temperature heat may be generated. In case that an electrolyte solution is present in the battery can 10 during the welding process, the electrolyte solution may be denaturized or ignited due to the high-temperature heat generated during the welding process.

Accordingly, after the processing of the welding portion W and bonding area M, during which high-temperature heat is generated, is complete as described above, the electrolyte solution may be injected through the liquid injection port 42.

The liquid injection port 42 may be provided in a location aligned with the core hollow portion of the electrode assembly 20. As a result, the injected electrolyte solution may penetrate deeply through the hollow core of the electrode assembly 20, and wetting may be performed smoothly.

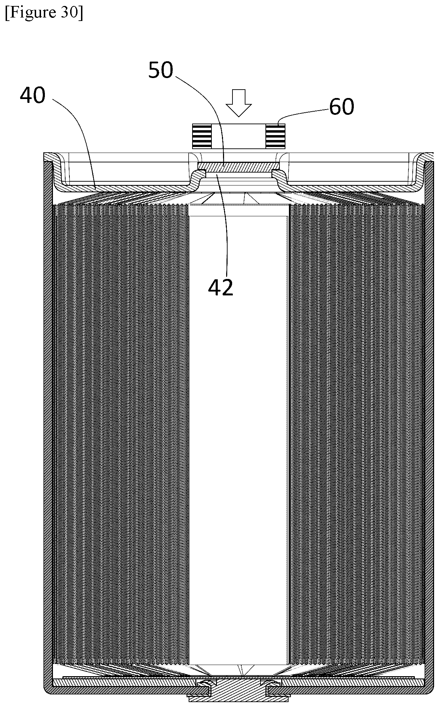

After liquid injection is completed, the liquid injection port 42 may be covered with a stopper 50, the stopper 50 may be pressed and heated using the previously described heat fusion equipment 60, and the heat-fusion layer may also be heated to form a heat-fused portion as shown in FIG. 30.

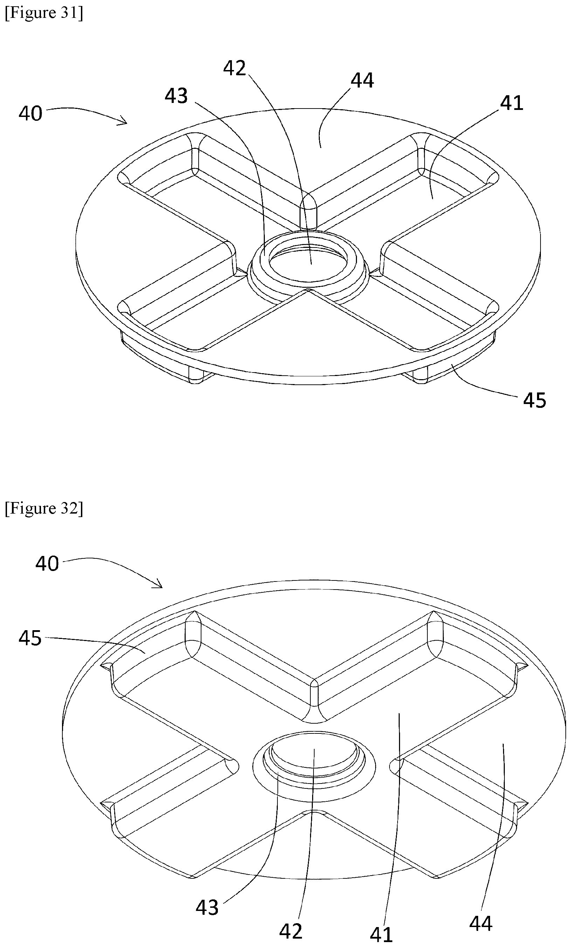

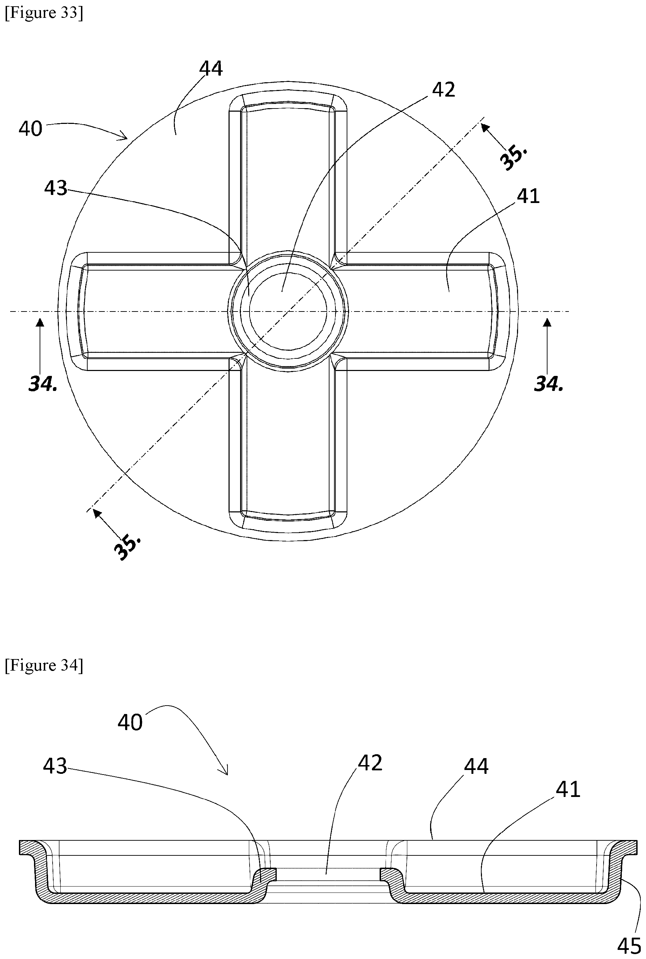

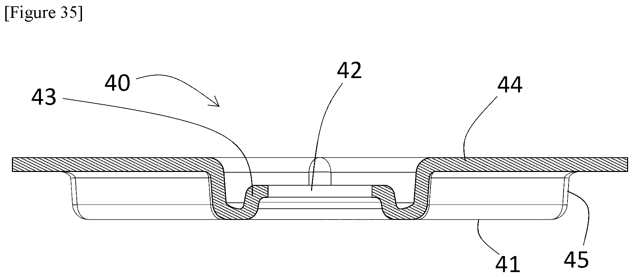

Hereinafter, the structure of the cap 40 applied to the battery cell of the fifth embodiment will be described in detail with reference to FIGS. 31 to 35.

The cap 40 may be manufactured from a circular metal sheet. The cap 40 has an electrode connecting part 41 recessed in a direction corresponding to the axial direction of the battery cell 72. The electrode connecting part 41 may be formed by molding the metal sheet using a press.

The bottom surface of the electrode connecting part 41 is in close contact with and bonded to the notched tab 27 of the second electrode 22 of the electrode assembly 20. The electrode connecting part 41 manufactured by press processing a metal sheet has a thickness slightly thinner than the thickness of the metal sheet. Accordingly, when a laser is irradiated onto the surface of the electrode connecting part 41, the local heat generated by the laser may melt and bond the surface of the notched tab 27 in contact with the electrode connecting part 41 and bottom surface thereof.

A plurality of electrode connecting parts 41 may be provided. The fifth embodiment illustrates a structure wherein four electrode connecting parts 41 are arranged radially at equal intervals of about 90 degrees in the circumferential direction. The electrode connecting part 41 extends in the radial direction, and a welding portion W for bonding the electrode connecting part 41 to the notched tab 27 of the second electrode 22 of the electrode assembly 20 may have a welding line shape formed in the radial direction to correspond to the extending direction of the electrode connecting part 41as shown in FIG. 29.

According to the embodiment, a line-shaped welding portion W extending in the radial direction is formed per plurality of electrode connecting parts 41.

The cap 40 provides a base surface 44 that is in contact with the floor when the battery can 10 is placed with the cap 40 of the battery can 10 facing the floor. The base surface 44 is provided at a location more elevated than the electrode connecting part 41 and is disposed between two neighboring electrode connecting parts 41 in the circumferential direction.

Accordingly, with the electrode connecting part 41 and the notched tab 27 in close contact with each other by pressing the base surface 44 at both sides of the electrode connecting part 41 in the circumferential direction with a jig, it is possible to weld the electrode connecting part 41 and the notched tab 27 by irradiating a laser onto the surface of the electrode connecting part 41 as shown in FIG. 29. As a result, welding may be performed reliably as the pressure of the jig against the electrode connecting part 41 brings the electrode connecting part 41 into close contact with the notched tab 27 along the lengthwise direction of the welding line at both sides of the welding line.

Pair of electrode connecting parts 41 facing each other with respect to the center of the cap 40 is arranged on a straight line passing through the center of the cap 40. Accordingly, the welding line of the two electrode connecting parts 41 aligned in-line may be formed by only one movement of the laser welding machine. For example, assuming that a first electrode connecting part, a second electrode connecting part, a third electrode connecting part and a fourth electrode connecting part are arranged sequentially along the circumferential direction in the cap 40 of the fifth embodiment, the first electrode connecting part and the third electrode connecting part may be welded at once, and the second electrode connecting part and the fourth electrode connecting part may be welded at once.

In addition, according to the embodiment, even when the base surface 44 provided at both sides of the first electrode connecting part and the third electrode connecting part arranged in-line with respect to the center of the cap 40 is pressed with a jig, the cap 40 may behave as a rigid body without being warped or bent despite the pressure of the jig because of large secondary moment of inertia formed by the recessed shape of the second electrode connecting part and the fourth electrode.

In the embodiment, by configuring the four electrode connecting parts 41 as above, all of the four electrode connecting parts 41 may be welded with two laser scan traces.

When the number of processed electrode connecting parts 41 is too large, the strength of the cap 40 made of metal sheet may be weakened. Additionally, when only two or three electrode connecting parts 41 are formed, it is difficult to construct a cross-section for securing a sufficient secondary moment of inertia along the circumferential direction.

When the four electrode connecting parts 41 on the cap 40 are provided to form a "+" shape as shown, the welding process may be performed accurately and easily, the warping resistance and the bending resistance of the cap 40 may also be secured, and the strength of the cap 40 may be prevented from weakening due to molding process. That is, while the cap 40 functions as a current collector plate, it is preferable to maintain the strength for original function of closing the open end of the battery can 10.

The outer side edge of the cap 40 in the radial direction has a shape that may be bonded to the other axial end of the sidewall portion 11 of the battery can 10. Accordingly, it is preferable that the outer side edge of the cap 40 in the radial direction is provided with a circular outer circumferential surface or inner surface.

The cap 40 according to the fifth embodiment has an edge with circular inner surface, and the electrode connecting part 41 is recessed from the inner side in the radial direction further inward in the axial direction than the circular inner surface of the edge. The circular inner surface of the cap 40 is in contact with the axial end surface of the sidewall portion 11 of the battery can 10 as shown in FIG. 29, and the bonding area M welded by a laser irradiated from the outer circumference side of the battery can 10 toward the inner side in the radial direction may be formed.

Here, the outer side edge of the recessed portion in the radial direction for forming the electrode connecting part 41 constitutes the outer wall. The outer wall may constitute a press-fitted outer wall 45 having an outer diameter corresponding to the inner diameter of the battery can 10. As a result, when assembling the cap 40 to the battery can 10, each of the press-fitted outer walls 45 of the plurality of electrode connecting parts 41 is connected to the inner circumferential surface of and press-fitted into the battery can 10 as shown in FIG. 29 to guide the center alignment of the cap 40 with respect to the battery can 10.

According to the fifth embodiment, since the four press-fitted outer walls 45 are evenly arranged along the circumferential direction and are in contact with the battery can 10 at some portion of the circumference of the inner circumferential surface, the cap 40 may be easily press-fitted into the battery can 10 without high press-fitting force of the cap 40.

As described above, the cap 40 according to the embodiment is advantageous in that manufacturing thereof is facilitated since the press-fitted outer wall 45 is molded together when the electrode connecting part 41 is molded.

In addition, according to the structure of the cap 40, since the laser for welding the cap 40 and the battery can 10 is irradiated in the radial direction, there is no risk of damaging the electrode assembly 20 by the laser being directly irradiated into the battery can 10 even when the inner surface of the edge of the cap 40 and some portion of the end of the sidewall portion 11 of the battery can 10 are not in close contact with each other due to unexpected errors.

According to the fifth embodiment, since the base surface 44 of the cap 40 is located further outer than the bonding area M between the cap 40 and the battery can 10 in the axial direction, the protection of the bonding area M is facilitated by not being in direct contact with the ground even when the battery can 10 is turned over and erected in upright orientation.

By applying the cap 40 described above, it is not necessary to use a current collector plate to electrically connect the tab of the second electrode 22 to the battery can 10, thereby reducing the number of parts and assembly man-hours, and securing more internal volume to increase energy density. In addition, the cap 40 electrically connected to the battery can 10 is directly connected to the metal foil 23 of the second electrode of the electrode assembly 20 through the welding portion W extending in the radial direction such that the current path is evenly distributed, thereby greatly reducing the internal resistance.

The liquid injection port 42 is provided at the center portion of the cap 40. The liquid injection port 42 may be provided on the bottom surface of the cap 40, that is, on the protruding portion 43 that slightly protrudes upward further than the electrode connecting part 41 of the cap 40. The height of the protruding portion 43 is set lower than that of the base surface 44, and the height of the stopper 50 may also be lower than the height of the base surface 44 with the liquid injection port 42 covered and closed by the stopper 50.

Since the protruding portion 43 protrudes higher than the bottom, access to the stopper by the heat fusion equipment 60 is facilitated when the stopper 50 is thermally bonded after the electrolyte solution is injected through the liquid injection port 42. In addition, although the temperature is low, it is possible to minimize the transfer of heat from the heat fusion device 60 to the inside of the battery can 10.

Since the stopper 50 is also located lower than the base surface 44, load is not directly applied to the stopper 50 even when the battery cell erected with the cap 40 in contact with the ground.

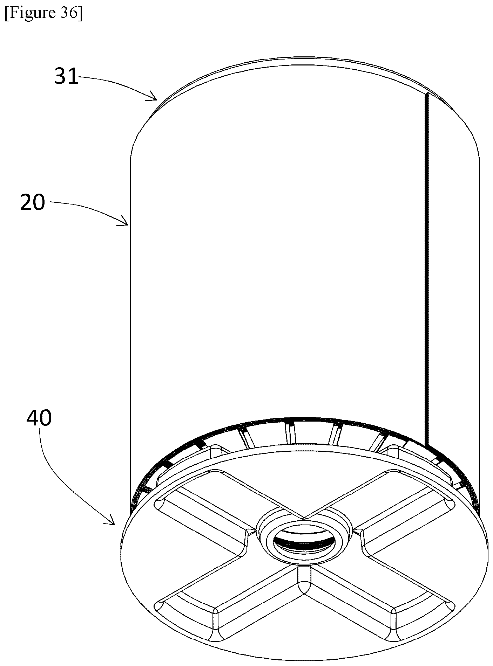

Meanwhile, the liquid injection port 42 provided at the center of the cap 40 may be a passage through which equipment for welding the first electrode terminal 13 and the current collector plate 31 of the first electrode 21 enters and exits. Accordingly, unlike the above-describe assembly sequence shown in FIGS. 26 to 29, the cap 40 may be inserted into the battery can 10 with the cap 40 bonded to the tab of the second electrode 22 of the electrode assembly 20 as shown in FIG. 36 when the electrode assembly 20 is placed inside the battery can.

That is, as shown in FIG. 36, with the current collector plate 31 bonded to the tab of the first electrode 21 of the electrode assembly 20 and the cap 40 bonded to the tab of the second electrode 22, the electrode assembly 20 may be accommodated in the battery can 10. In addition, the welding between the current collector plate 31 and the first electrode terminal 13 may be performed through the liquid injection port 42 of the cap 40 and the core hollow portion of the electrode assembly 20.

### [MANUFACTURING METHOD OF THE BATTERY CELL]

Since the cap 40 according to the fifth embodiment described above functions as a current collector plate for the second electrode and also has the original function of a cap, the cap 40 according to the fifth embodiment differs from a conventional battery cell provided with a current collector plate for the second electrode in the manufacturing method thereof.

In addition, since the cap 40 is provided with the liquid injection port 42, and the liquid injection port 42 may be used as a passage for the bonding process of the current collector plate 31 and the first electrode terminal 13, the manufacturing methods of the battery cell may be more diverse.

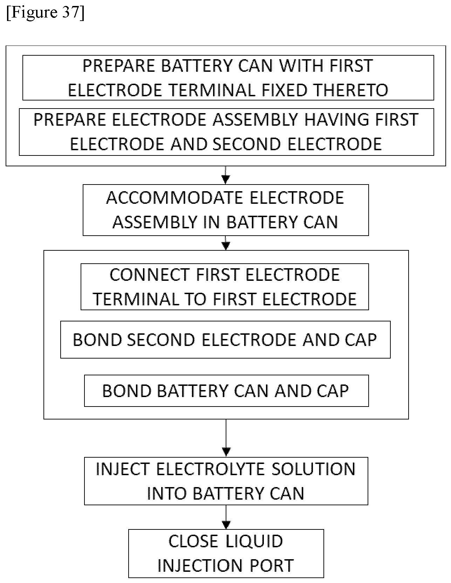

First, an embodiment of a manufacturing method of a battery cell will be described with reference to FIG. 37. The embodiment corresponds to the manufacturing method of the battery cell of FIGS. 26 to 30.

The manufacturing method includes: preparing a battery can 10 with a first electrode terminal 13 fixed thereto; and preparing an electrode assembly 20 having a first electrode 21 and a second electrode 22. Here, at one axial end of the electrode assembly 20, the first electrode 21 and a current collector plate 31 may be bonded and connected.

Thereafter, the electrode assembly 20 is inserted into the battery can 10 with the current collector plate facing the bottom portion 12 of the battery can 10, and the current collector plate 31 of the electrode assembly 20 is bonded to the first electrode terminal 13 fixed to the bottom portion 12 of the battery can 10 by a method such as welding.

Thereafter, the open end of the battery can 10 is covered with a cap 40. Here, preferably, the electrode connecting part 41 of the cap 40 and the tab of the second electrode 22 of the electrode assembly 20 in close contact with each other are bonded, and the perimeter of the open end of the battery can 10 and the edge of the cap 40 are then bonded.

Thereafter, the electrolyte solution is injected into the battery can 10 through the liquid injection port 42 of the cap 40.

And, finally, by applying the sealing structure of the liquid injection port described above, the liquid injection port 42 of the battery can 10 is closed and sealed with a stopper 50.

According to such manufacturing method, the electrolyte solution is prevented from be affected by the bonding heat since the bonding of the cap 40 and the second electrode 22 and the bonding of the cap 40 and the battery can 10 may be performed before injecting the electrolyte solution into the battery can 10 as well as not requiring a bonding operation of a separate current collector plate for the second electrode 22.

Hereinafter, the manufacturing method disclosed in FIG. 41 will be described.

The manufacturing method includes: preparing a battery can 10 with a first electrode terminal 13 fixed thereto; and preparing an electrode assembly 20 having a first electrode 21 and a second electrode 22. Here, at one axial end of the electrode assembly 20, the first electrode 21 and a current collector plate 31 may be bonded and connected. Additionally, the electrode connecting part 41 of the cap 40 and the tab of the second electrode 22 may be connected to the other axial end of the electrode assembly 20.

That is, the cap 40 may be bonded to the second electrode of the electrode assembly before the electrode assembly is accommodated in the battery can.

Thereafter, the electrode assembly 20 is inserted into the battery can 10 with the current collector plate facing the bottom portion 12 of the battery can 10. During this process, the cap 40 covers the open end of the battery can 10.

Thereafter, the current collector plate 31 of the electrode assembly 20 is bonded to the first electrode terminal 13 fixed to the bottom portion 12 of the battery can 10 by a method such as welding, and the perimeter of the open end of the battery can 10 and the edge of the cap 40 are then bonded.

Thereafter, the electrolyte solution is injected into the battery can 10 through the liquid injection port 42 of the cap 40.

And, finally, by applying the sealing structure of the liquid injection port described above, the liquid injection port 42 of the battery can 10 is closed and sealed with a stopper 50.

According to such manufacturing method, a bonding operation of a separate current collector plate for the second electrode 22 is not required, the electrolyte solution is prevented from be affected by the bonding heat since the bonding of the cap 40 and the second electrode 22 and the bonding of the cap 40 and the battery can 10 may be performed before injecting the electrolyte solution into the battery can 10, and assembly equipment may be further simplified by integrating the cap 40 into the electrode assembly 20 first instead of managing the cap 40 separately.

In this way, when manufacturing a battery cell by applying the cap 40 provided with the liquid injection port 42, the manufacturing methods of the battery cell may be more diverse.

In addition, since neither strong pressure nor high-temperature heat is applied to the cap 40 when sealing the liquid injection port 42, there is no risk of the internal structure of the battery can 10 being damaged or denaturalized or ignited by heat.

### [BATTERY PACK AND VEHICLE]

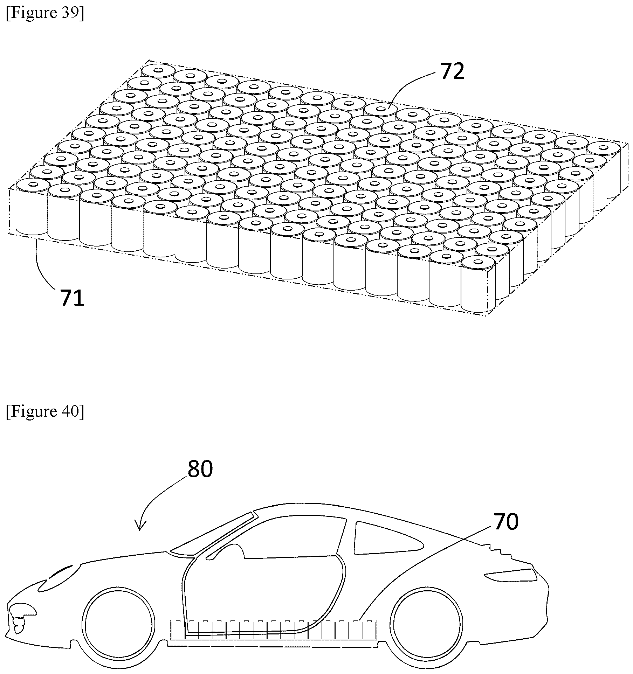

Referring to FIG. 39, the battery cell 72 employing the sealing structure of the liquid injection port described above and/or manufactured by the manufacturing method described above may be accommodated in the housing 71 of the battery pack 70. The battery pack 70 may be constructed using a battery module which is an intermediate form of assembly, or constructed directly without a battery module as shown.

Since the above-described battery cell 72 itself has a large volume, there is no particular difficulty in embodying the battery pack 70 even without using an intermediate structure so called battery module. In addition, since the second electrode is connected through the cap, the battery cell 72 has a lower internal resistance and higher energy density. Therefore, the energy density of the battery pack 70 may be embodied even higher.

The battery pack 70 with such increased energy density is capable of storing the same energy with reduced volume and weight. Therefore, when the battery pack 70 employing the battery cell 72 is mounted on a vehicle such as a vehicle 80 shown in FIG. 40 that uses electricity as an energy source, the driving range of the vehicle compared to energy may be further expanded.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery cell comprising:
a battery can 10 made of a metal material;
a cap 40 made of metal material and covering an open end of the battery can 10;
a liquid injection port 42 provided at the battery can 10 or the cap 40;
a stopper 50 made of metal material and covering the liquid injection port 42; and
a heat-fused portion interposed between a surface #1 of the battery can 10 or the cap 40 surrounding the liquid injection port 42 and a surface #2 of the stopper 50 in contact with the surface #1, , and fused to at least a portion of the surface #1 and the surface #2 in a closed loop shape surrounding the liquid injection port 42, wherein
the heat-fused portion comprises:
a first chrome-coated layer 46 provided on the surface #1;
a second chrome-coated layer 53 provided on the surface #2; and
a heat-fusion layer 55 having two sides in contact with the first chrome-coated layer 46 and the second chrome-coated layer 53, respectively, and containing polypropylene-maleic anhydride bonding to the first chrome-coated layer 46 and the second chrome-coated layer 53 by heat.

2. The battery cell of claim 1, wherein the PP-MAH is provided by insert injection on one of the first chrome-coated layer 46 provided on the surface #1 and the second chrome-coated layer 53 provided on the surface #2.

3. The battery cell of claim 1, wherein one of the first chrome-coated layer 46 and the second chrome-coated layer 53 functions as a substrate of polypropylene-maleic anhydride of the heat-fusion layer 55.

4. The battery cell of claim 1, wherein the heat-fusion layer 55 is a non-substrate layer containing polypropylene-maleic anhydride.

5. The battery cell of claim 1, wherein the stopper 50 comprises a center protrusion 51 inserted into the liquid injection port 42, and
the center protrusion 51 is in contact with an inner circumferential surface of the battery can 10 or the cap 40 defining the liquid injection port 42 to align centers of the stopper 50 and the liquid injection port 42.

6. The battery cell of claim 5, wherein the center protrusion 51 penetrates the liquid injection port 42 in a depthwise direction.

7. The battery cell of claim 5, wherein the center protrusion 51 is inserted only up to a predetermined depth of the liquid injection port 42.

8. The battery cell of claim 1, wherein the stopper 50 comprises a center protrusion 51 protruding, without being inserted into the liquid injection port 42, toward the liquid injection port 42 from a location facing the liquid injection port 42.

9. The battery cell of claim 1, wherein a recessed portion 47 accommodating the stopper 50 is provided around the liquid injection port 42, and
an outer circumferential surface of the stopper 50 is in contact with an inner circumferential surface of the recessed portion 47 to align centers of the stopper 50 and the liquid injection port 42.

10. The battery cell of claim 1, wherein a recessed portion 47 accommodating the stopper 50 is provided around the liquid injection port 42,
a protruding portion 43 defining the recessed portion 47 is provided around the recessed portion 47, and
an axially outer surface of the stopper 50 accommodated in the recessed portion 47 corresponds to a surface of the protruding portion 43 in an axial direction or is disposed further inward in the axial direction.

11. The battery cell of claim 1, wherein the surface #1 comprises a surface #1-1 facing outward in an axial direction of the battery cell,
the surface #2 comprises a surface #2-1 facing the surface #1-1 and facing inward in the axial direction of the battery cell, and
the heat-fused portion is provided between the surface #1-1 and the surface #2-1.

12. The battery cell of claim 11, wherein the surface #1 comprises a surface #1-2 facing inward in the radial direction of the battery cell,
the surface #2 comprises a surface #2-2 facing the surface #1-2 and facing outward in the radial direction, and
the heat-fused portion is provided between the surface #1-2 and the surface #2-2.

13. The battery cell of claim 11, wherein the surface #1 comprises a surface #1-2 facing inward in the radial direction of the battery cell,
the surface #2 comprises a surface #2-2 facing the surface #1-2 and facing outward in the radial direction, and
the heat-fused portion is not provided between the surface #1-2 and the surface #2-2.

14. The battery cell of claim 1, wherein the stopper 50 and the battery can 10 or the cap 40 bonded to the stopper 50 by the heat-fused portion are electrically connected.

15. The battery cell of claim 1, wherein the liquid injection port 42 is provided in the cap 40, and
an edge of the open end of the battery can 10 and an edge of the cap 40 are thermally bonded.

16. The battery cell of claim 15, wherein the battery can 10 and the cap 40 are thermally bonded by one process selected from welding, brazing and soldering.

17. The battery cell of claim 15, further comprising:
an electrode assembly 20 accommodated in the battery can 10 and comprising a first electrode 21 and a second electrode 22, wherein tab of the first electrode 21 and tab of the second electrode 22 are disposed at two sides of an axial direction, respectively,
wherein a first electrode terminal 13 electrically insulated from and fixed to a bottom portion 12 of the battery can 10 provided opposite to the open end in the axial direction, and
the first electrode 21 of the electrode assembly 20 is connected to the first electrode terminal 13 through a current collector plate 31 bonded to a tab of the first electrode 21.

18. The battery cell of claim 15, further comprising:
an electrode assembly 20 accommodated in the battery can 10 and comprising a first electrode 21 and a second electrode 22, wherein tab of the first electrode 21 and tab of the second electrode 22 are disposed at two sides of an axial direction, respectively,
wherein the cap 40 comprises an electrode connecting part 41 thermally bonded to a tab of the second electrode 22 of the electrode assembly 20.

19. The battery cell of claim 18, wherein the cap 40 and the tab of the second electrode 22 are thermally bonded by one process selected from welding, brazing and soldering.

20. The battery cell of claim 18, wherein the liquid injection port 42 is provided at the center portion of the cap 40, and
the electrode connecting part 41 extends radially around the liquid injection port 42.

21. The battery cell of claim 18, wherein the cap 40 comprises a base surface 44 extending outward in the axial direction from the electrode connecting part 41, and
an axially outer surface of the stopper 50 is disposed further inward in the axial direction than the base surface 44.

22. The battery cell of claim 18, wherein the liquid injection port 42 is provided at a protruding portion 43 protruding further than the electrode connecting part 41 in the axial direction.

23. A method of manufacturing a battery cell, the method comprising:
a battery can preparation step of preparing a battery can 10 having a sidewall portion 11, a bottom portion 12 connected to one axial end of the sidewall portion 11 and an open end provided at other axial end of the sidewall portion 11, and sealing and insulating a first electrode terminal 13 in a center of the bottom portion 12;
an electrode assembly preparation step of preparing an electrode assembly 20 comprising a first electrode 21 and a second electrode 22, wherein tab of the first electrode 21 and tab of the second electrode 22 are disposed at two sides of an axial direction, respectively;
a cap preparation step of preparing a liquid injection port 42 and a cap 40 with a first chrome-coated layer 46 around the liquid injection port 42;
a stopper preparation step of preparing a stopper 50 with a second chrome-coated layer 53;
a first electrode terminal connecting step of accommodating the electrode assembly 20 in the battery can 10 in a manner that the tab of the first electrode 21 faces the bottom portion 12 of the battery can 10 after the battery can preparation step and the electrode assembly preparation step, and connecting the tab of the first electrode 21 and the first electrode terminal 13;
a second electrode connecting step of connecting the cap 40 to the tab of the second electrode 22 after the electrode assembly preparation step and the cap preparation step;
a cap fixing step of fixing the cap 40 to the battery can 10 after the first electrode terminal connecting step;
a liquid injection step of injecting an electrolyte solution into the battery can 10 after the first electrode terminal connecting step, the second electrode connecting step and the cap fixation step; and
a liquid injection port closing step of closing the liquid injection port 42 with the stopper 50 by heating a heat-fusion layer interposed between the first chrome-coated layer 46 and the second chrome-coated layer 53 and containing polypropylene-maleic anhydride to form a heat-fused portion after the liquid injection step and the stopper preparation step.

24. The battery cell of claim 23, wherein the heat-fusion layer is provided by insert injection on the second chrome-coated layer 53 in the stopper preparation step.

25. A battery pack comprising a battery cell of any one of claims 1 to 22.

26. A vehicle comprising a battery pack of claim 25.
